(19)

Europäisches
Patentamt

European
Patent Office

Office européen
des brevets

(11) **EP 3 285 575 B1**

(12) **EUROPEAN PATENT SPECIFICATION**

(45) Date of publication and mention
of the grant of the patent:
**14.08.2019 Bulletin 2019/33**

(21) Application number: **16721721.5**

(22) Date of filing: **22.04.2016**

(51) Int Cl.:
**A01N 1/02** (2006.01)

(86) International application number:
**PCT/EP2016/059005**

(87) International publication number:
**WO 2016/170112 (27.10.2016 Gazette 2016/43)**

(54) **IN VITRO PRESERVATION OF THERAPEUTIC CELLS**

IN-VITRO KONSERVIERUNG THERAPEUTISCHER ZELLEN

CONSERVATION IN VITRO DE CELLULES THÉRAPEUTIQUES

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **23.04.2015 EP 15164903**

(43) Date of publication of application:
**28.02.2018 Bulletin 2018/09**

(73) Proprietor: **Bone Therapeutics S.A.**
**6041 Gosselies (BE)**

(72) Inventors:
 • **BASTIANELLI, Enrico**
 **1640 Rhode St Genese (BE)**
 • **BRENNER, Carmen**
 **1050 Bruxelles (BE)**
 • **DELTOUR, Elodie**
 **1410 Waterloo (BE)**

(74) Representative: **De Clercq & Partners**
**Edgard Gevaertdreef 10a**
**9830 Sint-Martens-Latem (BE)**

(56) References cited:
**WO-A1-2009/087213      WO-A1-2014/049063
US-A1- 2013 059 286**

• YAN CHEN ET AL: "Effects of Storage Solutions
on the Viability of Human Umbilical Cord
Mesenchymal Stem Cells for Transplantation",
CELL TRANSPLANTATION, vol. 22, no. 6, 1 June
2013 (2013-06-01), pages 1075-1086,
XP055216949, ISSN: 0963-6897, DOI:
10.3727/096368912X657602

• THOMAS A. LANE ET AL: "Liquid storage of
marrow stromal cells", TRANSFUSION, vol. 49,
no. 7, 1 July 2009 (2009-07-01), pages 1471-1481,
XP055216961, ISSN: 0041-1132, DOI:
10.1111/j.1537-2995.2009.02138.x

• ELAINE R GARVICAN ET AL: "Viability of equine
mesenchymal stem cells during transport and
implantation", STEM CELL RESEARCH &
THERAPY, BIOMED CENTRAL LTD, LONDON,
UK, vol. 5, no. 4, 8 August 2014 (2014-08-08),
pages 94-103, XP021196614, ISSN: 1757-6512,
DOI: 10.1186/SCRT483 cited in the application

Note: Within nine months of the publication of the mention of the grant of the European patent in the European Patent
Bulletin, any person may give notice to the European Patent Office of opposition to that patent, in accordance with the
Implementing Regulations. Notice of opposition shall not be deemed to have been filed until the opposition fee has been
paid. (Art. 99(1) European Patent Convention).

**Description**

**FIELD**

The invention is broadly in the medical field, more precisely in the field of cell-based products useful for cell therapy. In particular, the invention concerns *in vitro* preservation of living animal cells.

**BACKGROUND**

Animal cells, such as mesenchymal stem cells (MSC) or MSC-derived cells, that are intended for cell therapy need to be suitably preserved prior to their use for medical or medical research purposes, so as to remain viable and retain desired properties.

Such cells can be stored virtually indefinitely at the temperature of liquid nitrogen at atmospheric pressure (-196°C), whereby cryopreservative agents are commonly added to the cell suspension prior to freezing to prevent damage to the cells caused by the freezing process. However, due to the necessity to continuously maintain very low temperatures, transportation of cryopreserved cells from the place of their production (e.g., a cell therapy company) to the place of their use (e.g., a hospital) is logistically burdensome, and the continuing storage of the cells at the place of their use requires specialised equipment (e.g., liquid nitrogen tanks). Moreover, before use, such as before administration to a patient, the cells need to be thawed, washed to remove any cryopreservative agents, and resuspended in a suitable excipient composition. Such additional sample handling steps can *inter alia* reduce the viability of the cells, increase the risk of contamination of the cells, and increase between-sample variability.

Non-cryogenic methods of cell preservation are also known. In many such methods, cells may be generally stored as a cell suspension in a suitable aqueous liquid phase at temperatures typically ranging between about 0°C and about 8°C. Such aqueous storage liquids are commonly based on well-known tissue cell culture growth media, such as, e.g., Eagle's minimal essential medium (EMEM), Dulbecco's Modified Eagles Medium (DMEM), or Roswell Park Memorial Institute (RPMI) media. Alternatively, such aqueous storage liquids may be based on physiological electrolyte solutions, such as Plasma-Lyte® A (e.g., Plasma-Lyte® A Injection pH 7.4 (Multiple Electrolytes Injection, Type 1, USP) from Baxter, Deerfield, IL, USA), Lactated Ringer's solution (e.g., Lactated Ringer's Injection USP from Baxter, Deerfield, IL, USA) or Hartmann's solution, optionally supplemented with Human Serum Albumin (e.g., 5% w/v).

Historically, plasma or plasma-containing solutions have been used for extended non-cryogenic storage of blood cellular components, more particularly platelets or erythrocytes, in suspension. However, to the Applicant's knowledge, serum or plasma are not commonly employed as excipients in suspension cell products of cell types other than blood cellular components, in particular in suspension cell products intended for non-cryogenic storage of such cell products.

Sometimes, low concentrations, such as 10% v/v or 5% v/v or less, of autologous serum, autologous plasma or platelet rich plasma are included in solutions used to suspend therapeutic cells before their injection or infusion to patients. In other instances, therapeutic cells can be suspended in solutions containing mainly or exclusively autologous serum, autologous plasma or platelet rich plasma before their injection or infusion to patients. However, the cells are typically suspended in such serum- or plasma-containing solutions shortly before their administration to patients, and non-cryogenic storage of the cell suspensions has not been contemplated.

Several studies, including US 2014/242181, explored methods for bone repair or regeneration involving implantation of scaffolds comprised of autologous plasma or platelet rich plasma and containing embedded therapeutic cells. These studies do not concern suspension cell products, nor extended non-cryogenic storage thereof.

US 2013/059286 describes a method of preserving an umbilical cord comprising obtaining a segment of an umbilical cord; mincing the segment of the umbilical cord into cord tissue pieces; admixing the cord tissue pieces with a cryogenic composition comprising a cryoprotectant and a protein to form a mixture; shaking the mixture for a duration of no shorter than 20 minutes and no longer than 40 minutes; and cryopreserving the mixture.

WO 2009/087213 concerns methods for osteogenic differentiation of human bone marrow stem cells or mesenchymal stem cells, in particular using human plasma or serum and FGF and TGFB growth factors.

Chen et al. (Cell transplantation, 2013, vol. 22, no. 6, 1075-1086) describes the effects of storage solutions on the viability of human umbilical cord mesenchymal stem cells for transplantation.

Lane et al. (Transfusion, 2009, vol. 49, no. 7, 1471-1481) concerns a study of the effects of short-term liquid storage on the *in vitro* function of MSCs intended for a clinical trial by suspending human MSCs in 0.9% saline (with or without human serum albumin) or culture medium and storage at 4°C or room temperature for up to 72 hours.

Garvican et al. (Stem Cell Res Ther, 2014, vol. 5, 94) compared the effects of various allogeneic media on viability and proliferative properties of horse MSC subjected to suspension storage in the media for up to 72 hours at 4 to 8°C. Cell viability was clearly preserved for longer times in isotonic saline or DMEM supplemented with 10% v/v foetal bovine serum compared to allogeneic horse plasma or allogeneic horse serum. According to Garvican et al., the viability of horse MSC stored in equine plasma, serum or platelet-rich plasma (PRP) for 72 hours was considerably lower than 70%, which is a threshold of cell viability upon storage commonly required by regulatory authorities for therapeutic cell products. Garvican et al. instead advocates to maintain horse MSC in physiological saline for maximum of 24 hours, and suggests cryopreservation for longer storage periods.

The CellSeal® system from Cook Medical (Bloomington, IN, USA) is a closed system container for sample protection during shipment of non-frozen cell therapy products for direct clinical use (http://cellseal.cookmedical.com/wp-content/uploads/2014/04/PI-BP-SCIPOSJ-EN-201404.pdf). Horse MSC suspended in autologous plasma platelet lysate were packaged in CellSeal® vials, and shipped overnight at 4-8°C.

WO 2014/049063 discloses cell delivery formulations comprising solvent/detergent-treated plasma (S/D plasma) and mesenchymal stem cells configured for intra-osseous administration to subjects. The formulations are envisaged to display or attain gel consistency upon administration.

An object of the present invention is to provide additional and improved methods for *in vitro* preservation of living animal cells, such as of therapeutic cells useful for research or medical purposes.

## SUMMARY

As corroborated by the experimental section, which illustrates certain representative embodiments of the invention, the inventors have realised that mesenchymal stem cells (MSC) or MSC-derived cells subjected to non-cryogenic suspension storage in liquid storage media based on human plasma or human serum displayed advantageous cell product viability and stability, even after storage for extended time periods. The present findings are unexpected, *inter alia* because equine plasma and serum have been reported as less satisfactory than a number of other liquid media, most prominently physiological saline, for suspension storage of horse MSC for 24 hours, and because cryopreservation has in any event been recommended for longer storage periods of the horse MSC (Garvican et al.).

The present invention provides subject-matter as set forth in any one and all of the appended claims 1 to 14.

Accordingly, in an aspect the invention provides a method for non-cryogenic *in vitro* preservation of cells comprising maintaining adherent mesenchymal stem cells (MSC) or adherent MSC-derived cells in suspension in a composition comprising at least 20% v/v human plasma or human serum or a mixture thereof, wherein the composition is maintained at between 0.1°C and 25°C.

The above and further aspects and preferred embodiments of the invention are described in the following sections and in the appended claims. The subject matter of appended claims is hereby specifically incorporated in this specification.

## BRIEF DESCRIPTION OF DRAWINGS

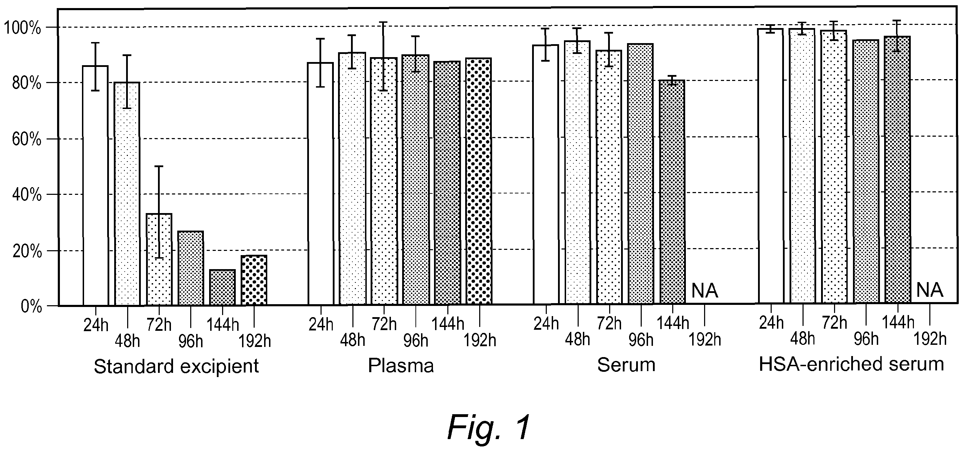

**Fig. 1** illustrates the proportion of living cells in a population of human MSC-derived osteoblastic cells after suspension storage at 2-8°C in the indicated storage media for 24, 48, 72, 96, 144 or 192 hours. NA (in this and subsequent figures): not available. "Standard excipient" (in this and subsequent figures): Plasma-Lyte® supplemented with 5% w/v HSA; "Plasma" (in this and subsequent figures): 100% Octaplas®; "Serum" (in this and subsequent figures): 100%, autoserum; HSA-enriched serum: Autoserum supplemented with 50% w/v human serum albumin (HSA).

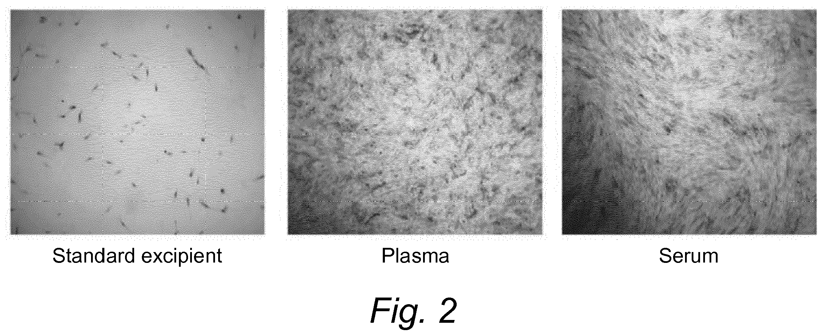

**Fig. 2** illustrates light microscopy images of human MSC-derived osteoblastic cells after suspension storage at 2-8°C for 72 hours in the indicated storage media, re-plating, and culturing for 24 hours.

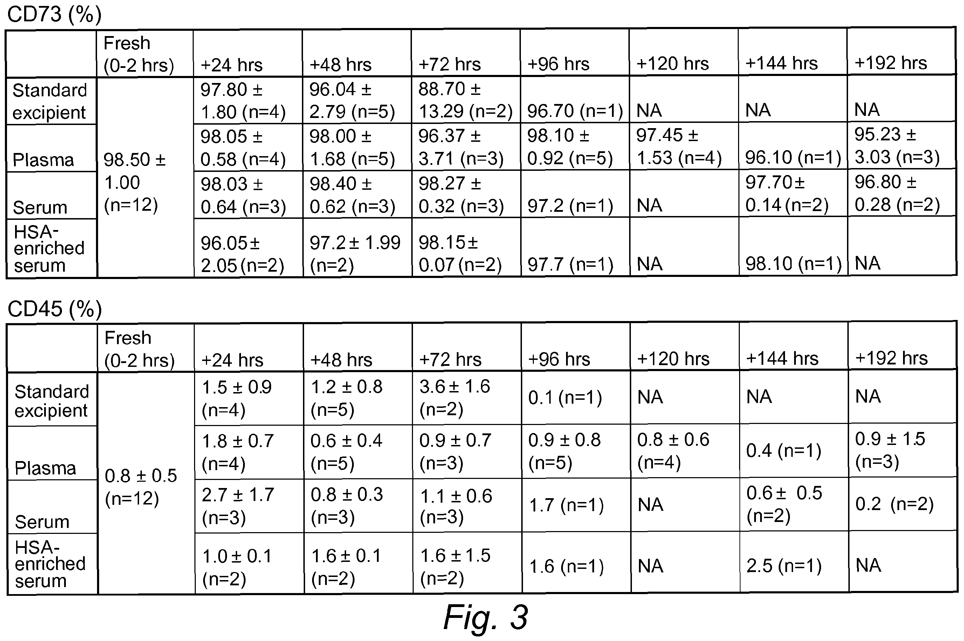

**Fig. 3** illustrates flow cytometric analyses of marker expression by human MSC-derived osteoblastic cells after suspension storage at 2-8°C in the indicated media for the indicated times. Results show the proportion (%; average $\pm$ standard deviation) of the cells considered positive for the respective markers.

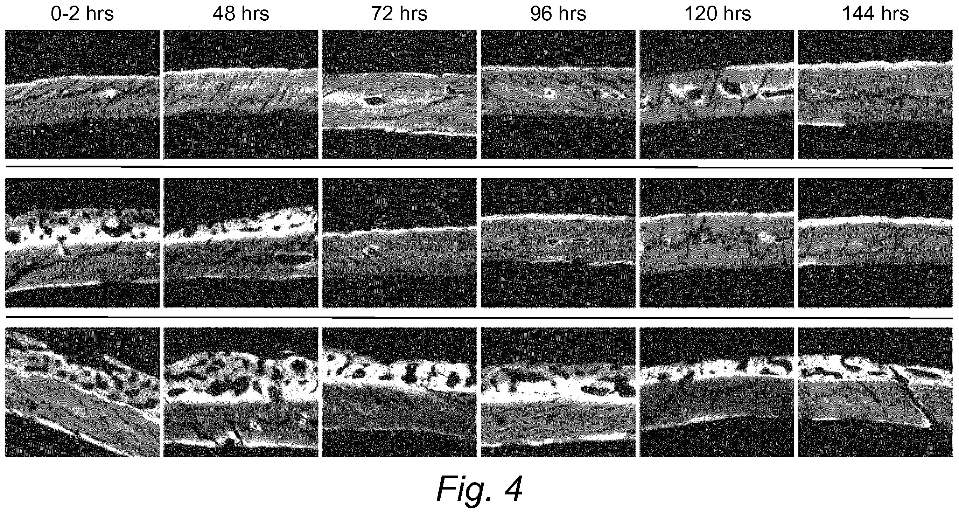

**Fig. 4** illustrates bone formation within mice calvaria, 14 days after injection of standard excipient without cells (top row), or the human MSC-derived osteoblastic cells previously stored in suspension at 2-8°C in standard excipient (middle row) or human plasma (bottom row), for the indicated times. The bone mineralised before cell injection appears comparatively darker, and the bone mineralised after cell injection appears comparatively lighter, due to incorporation of the fluorochromes, particularly the green calcein and yellow tetracyclin.

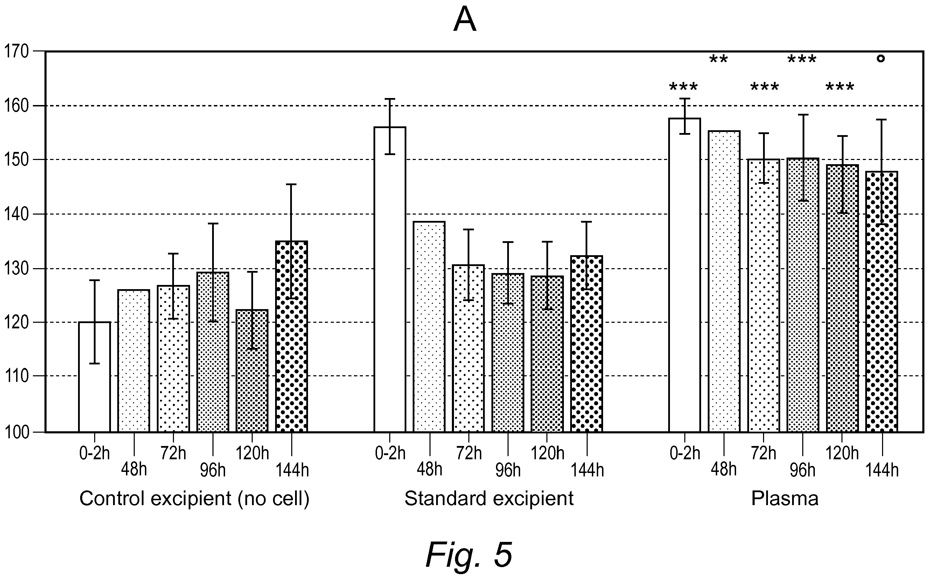

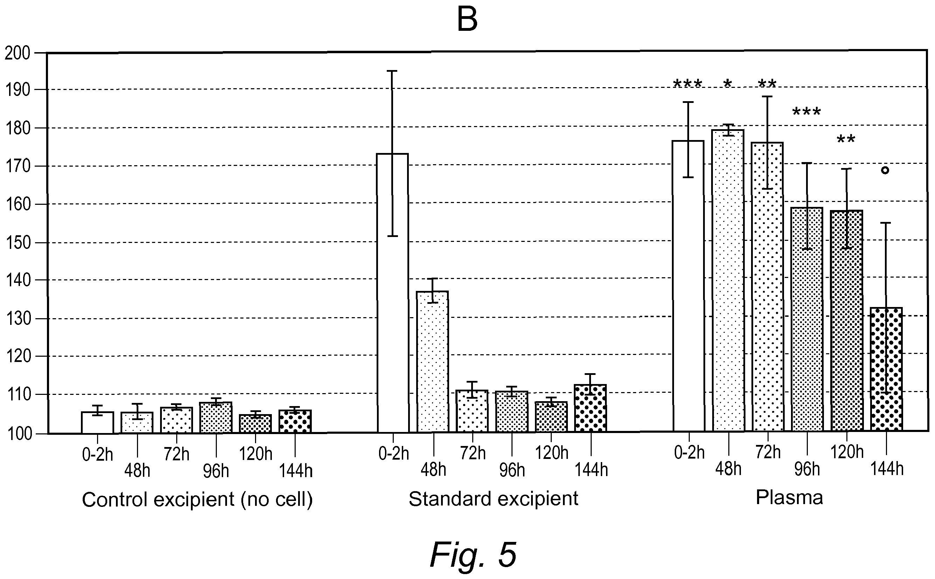

**Fig. 5** illustrates (**A**) bone density of mice calvaria, 14 days after injection of the MSC-derived osteoblastic cells previously stored in suspension at 2-8°C in the indicated media for the indicated times. The Y-axis represents the number of pixels measured on X-ray images. (**B**) Bone formation within mice calvaria, 14 days after injection of the MSC-derived osteoblastic cells previously stored in suspension at 2-8°C in the indicated media for the indicated times. The Y-axis represents the mean bone formation value (expressed in %). ° $p<0.1$, * $p<0.05$, ** $p<0.01$, *** $p<0.001$.

## DESCRIPTION OF EMBODIMENTS

As used herein, the singular forms "a", "an", and "the" include both singular and plural referents unless the context clearly dictates otherwise.

The terms "comprising", "comprises" and "comprised of" as used herein are synonymous with "including", "includes" or "containing", "contains", and are inclusive or open-ended and do not exclude additional, non-recited members, elements or method steps. The terms also encompass "consisting of' and "consisting essentially of', which enjoy well-established meanings in patent terminology.

The recitation of numerical ranges by endpoints includes all numbers and fractions subsumed within the respective ranges, as well as the recited endpoints.

The terms "about" or "approximately" as used herein when referring to a measurable value such as a parameter, an amount, a temporal duration, and the like, are meant to encompass variations of and from the specified value, such as variations of +/-10% or less, preferably +/-5% or less, more preferably +/-1% or less, and still more preferably +/-0.1% or less of and from the specified value, insofar such variations are appropriate to perform in the disclosed invention. It is to be understood that the value to which the modifier "about" refers is itself also specifically, and preferably, disclosed.

Whereas the terms "one or more" or "at least one", such as one or more members or at least one member of a group of members, is clear per se, by means of further exemplification, the term encompasses inter alia a reference to any one of said members, or to any two or more of said members, such as, e.g., any $\geq 3$, $\geq 4$, $\geq 5$, $\geq 6$ or $\geq 7$ etc. of said members, and up to all said members. In another example, "one or more" or "at least one" may refer to 1, 2, 3, 4, 5, 6, 7 or more.

The discussion of the background to the invention herein is included to explain the context of the invention. This is not to be taken as an admission that any of the material referred to was published, known, or part of the common general knowledge in any country as of the priority date of any of the claims.

Unless otherwise defined, all terms used in disclosing the invention, including technical and scientific terms, have the meaning as commonly understood by one of ordinary skill in the art to which this invention belongs. By means of further guidance, term definitions are included to better appreciate the teaching of the invention. When specific terms are defined in connection with a particular aspect of the invention or a particular embodiment of the invention, such connotation is meant to apply throughout this specification, i.e., also in the context of other aspects or embodiments of the invention, unless otherwise defined.

In the following passages, different aspects or embodiments of the invention are defined in more detail. Each aspect or embodiment so defined may be combined with any other aspect(s) or embodiment(s) unless clearly indicated to the contrary. In particular, any feature indicated as being preferred or advantageous may be combined with any other feature or features indicated as being preferred or advantageous.

Reference throughout this specification to "one embodiment", "an embodiment" means that a particular feature, structure or characteristic described in connection with the embodiment is included in at least one embodiment of the present invention. Thus, appearances of the phrases "in one embodiment" or "in an embodiment" in various places throughout this specification are not necessarily all referring to the same embodiment, but may. Furthermore, the particular features, structures or characteristics may be combined in any suitable manner, as would be apparent to a person skilled in the art from this disclosure, in one or more embodiments. Furthermore, while some embodiments described herein include some but not other features included in other embodiments, combinations of features of different embodiments are meant to be within the scope of the invention, and form different embodiments, as would be understood by those in the art. For example, in the appended claims, any of the claimed embodiments can be used in any combination.

As noted above, the inventors have realised that mesenchymal stem cells (MSC) or MSC-derived cells subjected to non-cryogenic suspension storage in liquid storage media comprising a given minimum quantity of human plasma or human serum displayed advantageous cell product stability, even after storage for extended time periods.

Accordingly, an aspect of the invention provides a method for non-cryogenic *in vitro* preservation of cells comprising maintaining adherent mesenchymal stem cells (MSC) or adherent MSC-derived cells in suspension in a composition comprising at least 20% v/v (relative to the volume of the composition) human plasma or human serum or a mixture thereof, wherein the composition is maintained at between 0.1°C and 25°C.

The present methods allow for non-cryogenic maintenance of the cells, such that the compositions remain in a non-frozen state (i.e., liquid state, typically having a temperature above the compositions' freezing point) during the storage.

The terms "composition", "formulation", or "preparation" may be used interchangeably herein.

The term "mesenchymal stem cell" or "MSC" as used herein refers to an adult, mesoderm-derived stem cell that is capable of generating cells of mesenchymal lineages, typically of two or more mesenchymal lineages, e.g., osteoblastic (bone), chondroblastic (cartilage), myocytic (muscle), tendonocytic (tendon), fibroblastic (connective tissue), adipocytic (fat) and stromogenic (marrow stroma) lineage. MSC may be isolated from, e.g., bone marrow, trabecular bone, blood, umbilical cord, placenta, foetal yolk sac, skin (dermis), specifically foetal and adolescent skin, periosteum and adipose tissue. Human MSC, their isolation, *in vitro* expansion, and differentiation, have been described in, e.g., US Pat. No. 5,486,359; US Pat. No. 5,811,094; US Pat. No. 5,736,396; US Pat. No. 5,837,539; or US Pat. No. 5,827,740. Any MSC described in the art and isolated by any method described in the art may be suitable in the present method.

The term MSC also encompasses the progeny of MSC, e.g., progeny obtained by *in vitro* or *ex vivo* proliferation (propagation) of MSC obtained from a biological sample of an animal or human subject.

Preferable MSC have the potential of generating cells of at least the osteoblastic (bone) lineage, such as, e.g., osteoprogenitors and/or pre-osteoblasts and/or osteoblasts and/or osteocytes, etc. or of at least the chondrogenic (cartilage) lineage, such as, e.g., chondrogenic cells and/or chondroblasts and/or chondrocytes, fibroblastic (connective tissue) lineage, such as, e.g., fibroblasts, fibrocytes or of at least synoviocytes (synovial fluid) or tenocytes etc.

The term "stem cell" refers generally to an unspecialized or relatively less specialized and proliferation-competent cell, which is capable of self-renewal, i.e., can proliferate without differentiation, and which or the progeny of which can give rise to at least one relatively more specialized cell type. The term encompasses stem cells capable of substantially unlimited self-renewal, i.e., wherein the progeny of a stem cell or at least part thereof substantially retains the unspecialized or relatively less specialized phenotype, the differentiation potential, and the proliferation capacity of the mother stem cell, as well as stem cells which display limited self-renewal, i.e., wherein the capacity of the progeny or part thereof for further proliferation and/or differentiation is demonstrably reduced compared to the mother cell. By means of example and not limitation, a stem cell may give rise to descendants that can differentiate along one or more lineages to produce increasingly relatively more specialized cells, wherein such descendants and/or increasingly relatively more specialized cells may themselves be stem cells as defined herein, or even to produce terminally differentiated cells, i.e., fully specialized cells, which may be post-mitotic.

The term "adult stem cell" as used herein refers to a stem cell present in or obtained from (such as isolated from) an organism at the foetal stage or preferably after birth (e.g., particularly but without limitation for a human organism, at least one month of age after birth, e.g., at least 2 months, at least 3 months, e.g., at least 4 months, at least 5 months, e.g., at least 6 months of age after birth, such as, for example, 1 year or more, 5 years or more, at least 10 years or more, 15 years or more, 20 years or more, or 25 years or more of age after birth), such as for example after achieving adulthood. By means of example, adult stem cells can be obtained from human subjects which would otherwise be described in the conventional terms "infant", "child", "youth", "adolescent" or "adult".

The terms "mesenchymal stem cell-derived cells" or "MSC-derived cells" as used herein refer to cells of mesenchymal lineage (e.g., osteoblastic (bone), chondroblastic (cartilage), myocytic (muscle), tendinocytic (tendon), fibroblastic (connective tissue), adipocytic (fat), or stromogenic (marrow stroma) lineage) obtained by differentiation of MSC, in particular obtained by *in vitro* (including *ex vivo*) differentiation of MSC.

Differentiation of MSC may involve culturing MSC under conditions capable of inducing the differentiation of MSC towards the desired cell type, more typically culturing MSC in a medium comprising one or more factors (e.g., growth factors) capable of inducing the differentiation of MSC towards the desired cell type. Protocols for differentiation of MSC are known *per se* (see, *inter alia*, WO 2007/093431; and further REGER, R.L. et al. 'Differentiation and Characterization of Human MSCs'. In: Mesenchymal Stem Cells: Methods and Protocols (Methods in Molecular Biology), Edited by D.J. Prockop et al. Humana Press, 2008, Vol. 449, p. 93-107; VERMURI, M.C. et al. (Eds.). Mesenchymal Stem Cell Assays and Applications (Methods in Molecular Biology). Humana Press, 2011, Vol. 698, especially pages 201 to 352).

The term "*in vitro*" generally denotes outside, or external to, animal or human body. The term "*ex vivo*" typically refers to tissues or cells removed from an animal or human body and maintained or propagated outside the body, e.g., in a culture vessel. The term "*in vitro*" as used herein should be understood to include "*ex vivo*". The term "*in vivo*" generally denotes inside, on, or internal to, animal or human body.

In certain embodiments, the MSC-derived cells may comprise cells of osteoblastic (bone) lineage, chondroblastic (cartilage) lineage, myocytic (muscle) lineage, tendinocytic (tendon) lineage, fibroblastic (connective tissue) lineage, adipocytic (fat) lineage, or stromogenic (marrow stroma) lineage.

In certain embodiments, the MSC-derived cells may comprise cells of osteoblastic (bone) lineage or chondroblastic (cartilage) lineage.

In certain embodiments of the methods as taught herein, the MSC-derived cells may comprise osteoprogenitors, osteoblastic cells, osteocytes, chondroblastic cells, chondrocytes, fibroblastic cells, fibroblasts, fibrocytes, tenoblasts, tenocytes, or synoviocytes, e.g., the MSC-derived cells may be selected from the group comprising or consisting of osteoprogenitors, osteoblastic cells, osteocytes, chondroblastic cells, chondrocytes, fibroblastic cells, fibroblasts, fibrocytes, tenoblasts, tenocytes, synoviocytes, and optionally mixtures thereof. In certain preferred embodiments of the methods as taught herein, the MSC-derived cells may comprise osteoprogenitors, osteoblastic cells, or osteocytes, e.g.,

the MSC-derived cells may be selected from the group comprising or consisting of osteoprogenitors, osteoblastic cells, osteocytes, and optionally mixtures thereof. In certain more preferred embodiments of the methods as taught herein, the MSC-derived cells may comprise osteoprogenitors or osteoblastic cells, e.g., the MSC-derived cells may be selected from the group comprising or consisting of osteoprogenitors, osteoblastic cells, and optionally mixtures thereof. In certain yet more preferred embodiments of the methods as taught herein, the MSC-derived cells may be osteoblastic cells.

As known in the art, cells of osteoblastic (bone) lineage typically encompass cell types having an osteogenic phenotype, and that can contribute to, or are capable of developing to cells which can contribute to, the formation of bone material or bone matrix. As used herein, "osteoprogenitors" may particularly comprise early and late osteoprogenitors. "Osteoblastic cells" may particularly encompass pre-osteoblasts and osteoblasts. All these terms are well-known *per se.*

By means of further guidance and not limitation, osteoprogenitors and osteoblastic cells, as well as cell populations comprising osteoprogenitors and/or osteoblastic cells may display the following characteristics:

a) the cells comprise expression of Runx2, a multifunctional transcription factor that regulates osteoblast differentiation and the expression of many extracellular matrix protein genes during osteoblast differentiation;

b) the cells comprise expression of at least one of the following: alkaline phosphatase (ALP), more specifically ALP of the bone-liver-kidney type; and more preferably also comprise expression of one or more additional bone markers such as osteocalcin (OCN), procollagen type 1 amino-terminal propeptide (P1NP), osteonectin (ON), osteopontin (OP) and/or bone sialoprotein (BSP), and/or one or more additional bone matrix proteins such as decorin and/or osteoprotegerin (OPG);

c) the cells substantially do not express CD45 (e.g., less than about 10%, preferably less than about 5%, more preferably less than about 2% of the cells may express CD45);

d) the cells show evidence of ability to mineralize the external surroundings, or synthesize calcium-containing extracellular matrix (e.g., when exposed to osteogenic medium; see Jaiswal et al. J Cell Biochem, 1997, vol. 64, 295-312). Calcium accumulation inside cells and deposition into matrix proteins can be conventionally measured for example by culturing in $^{45}Ca^{2+}$, washing and re-culturing, and then determining any radioactivity present inside the cell or deposited into the extracellular matrix (US 5,972,703), or using an Alizarin red-based mineralization assay (see, e.g., Gregory et al. Analytical Biochemistry, 2004, vol. 329, 77-84);

e) the cells substantially do not differentiate towards neither of cells of adipocytic lineage (e.g., adipocytes) or chondroblastic lineage (e.g., chondroblasts, chondrocytes). The absence of differentiation towards such cell lineages may be tested using standard differentiation inducing conditions established in the art (e.g., see Pittenger et al. Science, 1999, vol. 284, 143-7), and assaying methods (e.g., when induced, adipocytes typically stain with oil red O showing lipid accumulation; chondrocytes typically stain with alcian blue or safranin O). Substantially lacking propensity towards adipogenic and/or chondrogenic differentiation may typically mean that less than 20%, or less than 10%, or less than 5%, or less than 1% of the tested cells would show signs of adipogenic or chondrogenic differentiation when applied to the respective test.

As known in the art, cells of chondroblastic (cartilage) lineage typically encompass cell types having a chondrogenic phenotype, and that can contribute to, or are capable of developing to cells which can contribute to, the formation of cartilage or cartilaginous matrix. As used herein, "chondroprogenitors" may particularly comprise early and late chondroprogenitors. "chondroblastic cells" may particularly encompass pre-chondroblasts and chondroblasts. All these terms are well-known *per se.*

By means of further guidance and not limitation, chodroprogenitors and chondroblastic cells, as well as cell populations comprising chodroprogenitors and/or chondroblastic cells may display the following characteristics:

a) the cells comprise expression of SOX9, a transcription factor that plays a central role chondroblast differentiation and cartilage formation;

b) the cells comprise expression of at least one of the following: aggrecan (AGG), type-II collagen, or CD90;

c) the cells substantially do not express CD45 (e.g., less than about 10%, preferably less than about 5%, more preferably less than about 2% of the cells may express CD45);

d) the cells show evidence of ability to produce high level of collagen types II, IX, and XI and proteoglycans, the main constituents of the hyaline extracellular matrix (ECM) *in situ.* Cartilage formation can be conventionally measured for example by using a safranin-O/fast green assay to stain glysaminoglycans and non-collagenous protein, respectively (see, e.g., Lee et al. Tissue Engineering, 2011, vol. 18, 484-98);

e) human articular chondrocytes may display cell expression characteristics as summarised in Diaz-Romero et al. 2005 (J Cell Physiol, vol. 202(3), 731-42), e.g., they may express integrins and other adhesion molecules (CD49a, CD49b, CD49c, CD49e, CD49f, CD51/61, CD54, CD106, CD166, CD58, CD44), tetraspanins (CD9, CD63, CD81, CD82, CD151), receptors (CD105, CD119, CD130, CD140a, CD221, CD95, CD120a, CD71, CD14), ectoenzymes (CD10, CD26), and other surface molecules (CD90, CD99). During monolayer culture, chondrocytes may up-regulate certain markers regarded as distinctive for mesenchymal stem cells (CD10, CD90, CD105, CD166). Such markers may thus also be expressed by the less mature chondroblastic cells.

f) the cells substantially do not differentiate towards neither of cells of adipocytic lineage (e.g., adipocytes) or osteoblastic lineage (e.g., osteoblasts, osteocytes). The absence of differentiation towards such cell lineages may be tested using standard differentiation inducing conditions established in the art (e.g., see Pittenger et al. Science, 1999, vol. 284, 143-7), and assaying methods (e.g., when induced, adipocytes typically stain with oil red O showing lipid accumulation; osteoblastic cells typically stain for ALP). Substantially lacking propensity towards adipogenic and/or osteoblastic differentiation may typically mean that less than 20%, or less than 10%, or less than 5%, or less than 1% of the tested cells would show signs of adipogenic or osteoblastic differentiation when applied to the respective test.

As known in the art, cells of fibroblastic lineage can contribute to, or are capable of developing to cells which can contribute to, the formation of connective tissue.

By means of further guidance and not limitation, fibroblastic cells may display the following characteristics:

a) the cells comprise expression of FSP1 (fibroblast specific protein 1);

b) the cells comprise expression of at least one of the following: collagen, vimentin, desmin or CD90;

c) the cells substantially do not express CD45 (e.g., less than about 10%, preferably less than about 5%, more preferably less than about 2% of the cells may express CD45);

d) the cells show evidence of ability to produce collagen, glycosaminoglycan, reticular and elastic fibers, glycoproteins to form the extracellular matrix of the connective tissues. Fibroblasts, contribute to the structural integrity of ligaments and tendons and have a tissue repair function. Collagen deposition can be visualized using Trichrome staining (Li et al. World J Gastroenterol, 2014 vol. 20(16), 4648-61). Collagen type I (Chondres, Redmond, WA) and tenascin-C (Tn-C; IBL-America, Mineapolis, MN) are two markers for ligament fibroblasts, and can be assayed by ELISA (Brissett et al. Arthritis Rheum, 2012, vol. 64(1), 272-80).

As known in the art, cells of tendinocytic lineage can contribute the formation of tendon material or tendon matrix. Tendon is constituted by large fiber bundles that comprise a network of collagen fibrils and different types of cells, including synovial cells, endothelial cells, tenoblasts, and tenocytes lying longitudinally as row in collagen molecules. Tenoblasts are immature form of tendon cells that differentiate toward tenocytes as they age with decreased metabolic activity.

By means of further guidance and not limitation, tenocytes may display the following characteristics:

a) the cells comprise expression of scleraxis (SCX), a member of basic helix-loop-helix family of transcription factor is involved in cellular differentiation and extracellular matrix organization in tendons;

b) the cells comprise expression of at least one of the following: tenomodulin (TNMD) and Tenascin-C (TNC);

c) the cells substantially express CD44, CD73, CD90 and CD 105 but do not express CD34, CD45, CD146, or stro-1;

d) the cells show evidence of ability to produce extracellular component of tendon that consist of type I, III and V collagens, proteoglycans, fibronectin, and elastic fibrils for tendon tissue regeneration (Güngörmüs et al. Connect Tissue Res, 2008, vol. 53(6), 485-91);

e) the cells substantially do not differentiate towards neither of cells of adipocytic lineage (e.g., adipocytes), chondroblastic lineage (e.g., chondroblasts, chondrocytes) or osteoblastic lineage (e.g., osteoblasts, osteocytes).

As known in the art, cells of synoviocyte (synovial fluid) lineage typically encompass type A or macrophage-like synovial cells and type B or fibroblasts like synoviocytes (FLC), and that can contribute to the formation of synovial membrane and synovial liquid. All these terms are well-known *per se.* The term "synoviocyte" as used herein thus refers to any one, as well as collectively all, such cell types.

By means of further guidance and not limitation, synoviocytes may display the following characteristics:

a) the cells show evidence of ability to secrete proteoglycan 4 (PRG4) and are the major source of surface-active phospholipids (SAPL) as well as hyaluronan (HA) present in the synovial fluid (Tamer et al. Interdiscip Toxicol, 2013, vol. 6(1), 111-125);

b) the type A or macrophage-like synovial cells comprise expression of hematopoietic origin markers including CD11b, CD86, CD14, CD163, DR antigen and Fc receptor. The type B or fibroblasts like synoviocytes are mesenchymal cells that display many characteristics of fibroblasts, including expression of type IV and V collagens, vimentin, and CD90. In addition, the type B cells have some unique properties *in situ* that distinguishes from many other fibroblast lineages, including sublining resident fibroblasts. For instance, cadherin-11 (specific adhesion molecule that play a key role in homotypic aggregation of FLS), CD55 (decay accelerating factor), VCAM-1 (vascular adhesion molecule 1) and ICAM-1 (intercellular adhesion molecule 1) (Bartok et al. Immunol Rev, 2011, vol. 233(1), 233-255);

c) the cells substantially do not express CD45 (e.g., less than about 10%, preferably less than about 5%, more preferably less than about 2% of the cells may express CD45);

d) the cells substantially do not differentiate towards neither of cells of adipocytic lineage (e.g., adipocytes), chondroblastic lineage (e.g., chondroblasts, chondrocytes) or osteoblastic lineage (e.g., osteoblasts, osteocytes).

Wherein a cell is said to be positive for (or to express or comprise expression of) a particular marker, this means that a skilled person will conclude the presence or evidence of a distinct signal, e.g., antibody-detectable or detection by reverse transcription polymerase chain reaction, for that marker when carrying out the appropriate measurement, compared to suitable controls. Where the method allows for quantitative assessment of the marker, positive cells may on average generate a signal that is significantly different from the control, e.g., but without limitation, at least 1.5-fold higher than such signal generated by control cells, e.g., at least 2-fold, at least 4-fold, at least 10-fold, at least 20-fold, at least 30-fold, at least 40-fold, at least 50-fold higher or even higher.

The expression of the above cell-specific markers can be detected using any suitable immunological technique known in the art, such as immuno-cytochemistry or affinity adsorption, Western blot analysis, flow cytometry, ELISA, etc., or by any suitable biochemical assay of enzyme activity (e.g., for ALP), or by any suitable technique of measuring the quantity of the marker mRNA, e.g., Northern blot, semi-quantitative or quantitative RT-PCR, etc. Sequence data for markers listed in this disclosure are known and can be obtained from public databases such as GenBank (http://www.ncbi.nlm.nih.gov/).

Wherein a detection method allows to evaluate the expression of a marker on a single cell level (e.g., flow cytometry), and wherein the cells are said to comprise expression of the marker, a sizeable fraction of the tested cells may be positive for the marker, e.g., at least about 20%, at least about 40%, preferably at least about 50%, more preferably at least about 60%, even more preferably at least about 70%, still more preferably at least about 80%, yet more preferably at least about 90%, and still more preferably at least about 95% and up to 100% of the tested cells may be positive for the marker.

In certain embodiments of the methods, as taught herein, the MSC or MSC-derived cells in the composition may be may be animal cells, preferably warm-blooded animal cells, more preferably mammalian cells, such as human cells or non-human mammalian cells, and most preferably human cells.

MSC or MSC-derived cells as intended herein are adherent, i.e., require a surface for growth, and typically grow as an adherent monolayer on said surface (i.e., adherent cell culture), rather than as free-floating cells in a culture medium (suspension culture). Adhesion of cells to a surface, such as the surface of a tissue culture plastic vessel, can be readily examined by visual inspection under inverted microscope. Cells grown in adherent culture require periodic passaging, wherein the cells may be removed from the surface enzymatically (e.g., using trypsin), suspended in growth medium, and re-plated into new culture vessel(s). In general, a surface or substrate which allows adherence of cells thereto may be any substantially hydrophilic substrate. As known in the art, tissue culture vessels, e.g., culture flasks, well plates, dishes, or the like, may be usually made of a large variety of polymeric materials, suitably surface treated or coated after moulding in order to provide for hydrophilic substrate surfaces

The methods as taught herein generally relate to *in vitro* preservation of living (viable) MSC or MSC-derived cells. Preferably, the MSC or MSC-derived cells in the composition are functional cells.

The terms "living cells" or "viable cells" as used herein refer to cells that can be qualified as viable by tests known *per se,* and more particularly refer to MSC or MSC-derived cells that are capable of dividing and proliferating. Where MSC or MSC-derived cells are said to be living or viable, a sizeable fraction of the tested cells may test as viable, e.g., at least about 20%, at least about 40%, preferably at least about 50%, more preferably at least about 60%, even more preferably at least about 70%, still more preferably at least about 80%, yet more preferably at least about 90%, and still more preferably at least about 95% and up to 100% of the tested cells may test as viable.

Viability of cells may be measured using techniques known in the art. Techniques for determining viability or cell survival are commonly referred to as viability assays. For instance, the viability of cells may be measured using conventional dye exclusion assays, such as Trypan Blue exclusion assay or propidium iodide exclusion assay. In such assays, viable cells exclude the dye and hence remain unstained, while non-viable cells take up the dye and are stained. The cells and their uptake of the dye can be visualised and revealed by a suitable technique (e.g., conventional light microscopy, fluorescence microscopy, flow cytometry), and viable (unstained) and non-viable (stained) cells in the tested sample can be counted. Cell survival can be conveniently expressed as the absolute number of living cells, or as cell viability (i.e., the ratio or proportion (%) of viable cells to total (i.e., sum of viable and non-viable) cells).

The term "functional cells" as used herein refers to MSC or MSC-derived cells that retain their natural cellular properties and are capable of performing their natural cellular functions, such as cell recovery (e.g., the ability of the cells to adhere to a surface), cell identity (e.g., the expression of key cell surface markers), and cell potency (e.g., bone-forming properties). Where MSC or MSC-derived cells are said to be functional, a sizeable fraction of the tested cells may have retained their natural cellular properties, e.g., at least about 20%, at least about 40%, preferably at least about 50%, more preferably at least about 60%, even more preferably at least about 70%, still more preferably at least about 80%, yet more preferably at least about 90%, and still more preferably at least about 95% and up to 100% of the tested cells.

Functionality of cells may be measured using techniques known in the art. Techniques for determining functionality of cells include assays for measuring known cellular functions, such as cell recovery, cell identity, and cell potency.

For instance, cell recovery can be measured by determining the number or fraction (%) of the MSC or MSC-derived cells that attach to tissue culture plastic surface after a predetermined time (e.g., 24 hours) in culture. The adherent cells may be visualised by conventional light microscopy. Suitable staining methods, e.g., Romanowsky-type stains, may be used to improve the visualisation of the cells.

For instance, cell identity can be determined by detecting the expression of key cell surface markers characterising the MSC or MSC-derived cells. Ideally, the expression of the markers in MSC or MSC-derived cells subjected to an *in vitro* preservation method as taught herein does not significantly differ from the expression of the markers in MSC or MSC-derived cells not subjected to the *in vitro* preservation method (i.e., control).

By means of example but without limitation, suitable cell surface markers to evaluate cell identity of MSC may include CD105, CD90, CD73, and CD45. These cell surface markers can for instance be detected by commercially available monoclonal antibodies, such as fluorochrome-labelled monoclonal antibodies allowing for cell detection by flow cytometry. In particular, CD105, CD90, and CD73 are mesenchymal markers, and are typically highly expressed by MSC; CD45 is a hematopoietic marker, and is typically substantially absent from MSC.

By means of example but without limitation, suitable cell surface markers to evaluate cell identity of MSC-derived osteoblastic cells may include CD105, CD90, CD73, CD45 and alkaline phosphatase (ALP), particularly ALP of the bone-liver-kidney type. These cell surface markers can for instance be detected by commercially available monoclonal antibodies, such as fluorochrome-labelled monoclonal antibodies allowing for cell detection by flow cytometry. In particular, CD105, CD90, and CD73 are mesenchymal markers, and are typically highly expressed by MSC-derived osteoblastic cells; CD45 is a hematopoietic marker, and is typically substantially absent from MSC-derived osteoblastic cells; ALP is a marker of osteoblastic cells, and is typically expressed by a substantial fraction of MSC-derived osteoblastic cells.

For instance, cell potency of MSC-derived osteoblastic cells can be determined by measuring bone-forming properties of such cells. The ability of MSC-derived osteoblastic cells to induce bone formation can be measured *in vivo* for example by evaluating the thickness of newly mineralised bone after administration of the cells to mice by subcutaneous injection over the calvaria.

In certain embodiments of the methods as taught herein the concentration of MSC or MSC-derived cells (preferably of living MSC or MSC-derived cells, or preferably of living and functional MSC or MSC-derived cells) in the composition may be between about $1 \times 10^4$ and about $1 \times 10^{11}$, or between about $1 \times 10^5$ and about $1 \times 10^{10}$, or between about $1 \times 10^6$ and about $1 \times 10^9$ cells per mL of the composition. In certain embodiments, the concentration of MSC or MSC-derived cells in the composition may be between about $1 \times 10^7$ and about $1 \times 10^8$ cells per mL of the composition. In certain embodiments, the concentration of MSC or MSC-derived cells in the composition may be between about $2 \times 10^7$ and about $5 \times 10^7$ cells per mL of the composition. In certain embodiments, the concentration of MSC or MSC-derived cells in the composition may be about $2.5 \times 10^7$ cells per mL of the composition.

The term "plasma" is as conventionally defined. In certain embodiments, the human plasma may be, or the source of human plasma may be fresh plasma, freeze-dried plasma, solvent/detergent-treated plasma, fresh frozen plasma, thawed plasma, or cryoprecipitate, cryosupernatant or plasma concentrate such as concentrate from frozen plasma, or a mixture of any two or more thereof. Plasma is usually obtained from a sample obtained by apheresis or from a sample of whole blood, provided or contacted with an anticoagulant, (e.g., heparin, citrate, oxalate or EDTA). Subsequently, cellular components of the blood sample are separated from the liquid component (plasma) by an appropriate technique, typically by centrifugation. By means of a specific example but not limitation, to obtain plasma suitable for use in the present invention, a blood sample may be drawn into a vacutainer tube containing the anticoagulant EDTA (ethylenediaminetetraacetic acid) (e.g., BD Vacutainer plastic EDTA tube, 10 ml, 1.8 mg/mL). The sample is gently shaken and then centrifuged during 10 min at room temperature at 1,000-2,000 g to separate the plasma from red blood cells. The supernatant (plasma) is collected, optionally pooled (if a plurality of blood samples is used), and aliquoted into cryovials, which are stored at -80°C until use. The term "plasma" therefore refers to a composition without cellular components of the blood sample, which does not form part of a human or animal body. Hence, plasma as intended herein is acellular plasma, e.g., the plasma includes less than about 1.0% w/w, preferably less than about 0.5% w/w or less than 0.1% w/w whole cellular material, or includes substantially no whole cellular material.

The plasma may be preferably unprocessed plasma, i.e., plasma derived by separation from whole blood and not subjected to downstream processing steps which alter its chemical, biochemical, or cellular composition, other than optional heat inactivation, storage (cryogenic or non-cryogenic), sterilisation, filtration, freeze-drying and/or solvent/detergent treatment.

The term "plasma" may in certain embodiments specifically exclude processed plasma, i.e., plasma subjected after its separation from whole blood to one or more processing steps which alter its composition, specifically its chemical, biochemical, or cellular composition. Preferably, the term "plasma" as intended herein specifically excludes platelet-rich plasma (PRP), i.e., plasma that has been enriched with platelets. Typically, PRP may contain about $1.0 \times 10^6$ platelets/$\mu$l, whereas platelet concentration in whole blood may be about $1.5 \times 10^5$ to $3.5 \times 10^5$/$\mu$L. Accordingly, plasma as intended herein may contain less than about $8.0 \times 10^5$, preferably less than about $7.0 \times 10^5$, more preferably less than about $6.0 \times 10^5$, yet more preferably less than about $5.0 \times 10^5$, such as less than about $4.0 \times 10^5$ platelets/$\mu$L.

The plasma as intended herein is human plasma, i.e., obtained from a single human subject or from a plurality of human subjects (e.g., plasma mixed pool).

The plasma may be used directly in the present methods. Plasma can also be appropriately stored for later use (e.g., for shorter time periods, e.g., up to about 1-2 weeks, at a temperature above the freezing points of plasma, but below ambient temperature, this temperature will usually be about 4°C to 5°C; or for longer times by freeze storage, usually at between about -70°C and about -80°C).

The methods of the present invention may employ plasma which is autologous to the subject to be treated, and hence to the cells to be preserved in the composition comprising the plasma. The term "autologous" with reference to plasma denotes that the plasma is obtained from the same subject to be contacted or treated with the plasma. The methods of the present invention may employ plasma which is "homologous" or "allogeneic" to the subject to be treated, and hence to the cells to be preserved in the composition comprising the plasma, i.e., obtained from one or more (pooled) subjects other than the subject to be contacted or treated with the plasma. The methods of the present invention may also employ a mixture of autologous and homologous (allogeneic) plasma as defined above. Preferably, the methods of the present invention may employ plasma which is "allogeneic" to the subject to be treated. Advantageously, allogeneic plasma is commercially available and hence is an unrestricted source of plasma. Particularly intended herein is human plasma, more preferably allogeneic human plasma for the *in vitro* preservation of human MSC or MSC-derived cells.

The plasma may be heat inactivated as known in the art, particularly to remove the complement. Where the present methods employ plasma autologous to the subject to be treated, it may be unnecessary to heat inactivate the plasma. Where the plasma is at least partly allogeneic to the subject to be treated, it may be advantageous to heat inactivate the plasma.

In certain embodiments, the plasma may be solvent/detergent-treated plasma. The terms "solvent/detergent-treated plasma", "S/D-treated plasma", or "S/D plasma" generally refer to decellularised plasma (i.e., plasma without cellular components of the blood, acellular plasma) obtainable or obtained by a method comprising the steps of: (a) treating plasma with a solvent and a detergent and (b) filtering the solvent/detergent-treated plasma.

The plasma to be treated in step (a) may be any plasma as conventionally defined such as fresh plasma, reconstituted freeze-dried plasma, fresh frozen plasma, thawed frozen plasma, or cryoprecipitate, cryosupernatant or concentrate from frozen plasma, as well as dilution products thereof.

Solvents such as di- or trialkylphosphates and detergents are described in US 4,764,369. The solvent used for preparing S/D plasma preferably is a dialkylphosphate or a trialkylphosphate, both having alkyl groups which contain 1 to 10 carbon atoms, especially 2 to 10 carbon atoms. Illustrative examples of solvents may include tri-(n-butyl)phosphate, tri-(t-butyl)phosphate, tri-(n-hexyl)phosphate, tri-(2-ethylhexyl)phosphate, or tri-(n-decyl)phosphate. A preferred solvent is tri-(n-butyl)phosphate. Mixtures of different trialkylphosphates can also be employed as well as phosphates having alkyl groups of different alkyl chains, for example, ethyl, di(n-butyl)phosphate. Similarly, the respective dialkylphosphates can be employed including those of different alkyl group mixtures of dialkylphosphate. Furthermore, mixtures of di- and trialkylphosphates can be employed.

The solvent such as di- or trialkylphosphate for use in the treatment step (a) preferably is employed in an amount ranging from about 0.01 mg/ml to about 100 mg/ml, and preferably from about 0.1 mg/ml to about 10 mg/ml. Stated differently, di- or trialkylphosphates for use in the treatment step (a) preferably are employed in an amount ranging from about 0.001% w/v to about 10% w/v, and preferably from about 0.01% w/v to about 1% w/v.

The detergent used for preparing S/D plasma preferably is a non-toxic detergent. Contemplated nonionic detergents include those which disperse at the prevailing temperature at least 0.1% by weight of the fat in an aqueous solution containing the same when 1 gram detergent per 100 ml of solution is introduced therein. Illustrative examples of detergents may include polyoxyethylene derivatives of fatty acids, partial esters of sorbitol anhydrides, for example, those products known commercially as "Tween 80" or "polysorbate 80" (polyoxyethylene (20) sorbitan monooleate), "Tween 20" or "polysorbate 20" (polyoxyethylene (20) sorbitan monolaurate) and nonionic oil soluble water detergents such as that sold commercially under the trademark "Triton X 100" (oxyethylated alkylphenol, octyl phenol ethoxylate). Also contemplated is sodium deoxycholate as well as the "Zwittergents" which are synthetic zwitterionic detergents known as "sulfobetaines" such as N-dodecyl-N, N-methyl-2-ammonio-1 ethane sulphonate and its congeners or nonionic detergents such as octyl-beta-D-glucopyranoside.

The amount of detergent may range from about 0.001% v/v to about 10% v/v, preferably from about 0.01% v/v to 1.5% v/v.

The treatment with solvent and detergent preferably is effected at a temperature between -5 °C and 70 °C, preferably between 0 °C and 60 °C. The time of such treatment (contact) is at least 1 minute, preferably at least 1 hour and generally 4 to 24 hours. The treatment is normally effective at atmospheric pressure, although subatmospheric and superatmospheric pressures may also be employed.

Normally, after the treatment, the solvent such as trialkylphosphate and the detergent are removed. The solvent and detergent may be removed by any technique suitable for separating the solvent and detergent from the plasma. When a nonionic detergent is employed with the solvent such as trialkylphosphate, they may be removed by: (1) diafiltration using microporous membranes such as TEFLON which retain the plasma proteins; (2) absorption of desired plasma components on chromatographic or affinity chromatographic supports; (3) precipitation, for example, by salting out of plasma proteins; (4) lyophilization, etc.

Solvents such as dialkylphosphate or trialkylphosphate may be removed as follows: (a) removal from antihemophilic factor (AHF) can be effected by precipitation of AHF with 2.2 molar glycine and 2.0M sodium chloride (b) removal from fibronectin can be effected by binding the fibronectin on a column of insolubilized gelatin and washing the bound fibronectin free of reagent.

The filtering step (b) is generally performed with a 1 μm filter to remove cells and debris, followed by sterile filtration using a 0.2μm filter.

By virtue of a preferred example, as described by Horowitz et al., 1992 (Blood, 3, 826-831), S/D plasma may be prepared as follows: fresh frozen plasma may be rapidly thawed and may be treated with stirring for 4 hours with 1% (v/v) tri-(N-butyl)-phosphate (TNBP) and 1% (v/v) polyoxyethylene-p-t-octylphenol (Triton X-100) at 30°C. After treatment, edible oil such as soybean oil (5% v/v) or castor oil may be added, gently mixed for 30 minutes, and may be removed by centrifugation at 10,000 g for 20 minutes. The clarified plasma may be applied to a column of Waters Prep C18 resin such that the ratio of plasma to column volume is 6 and the contact time may be 3 minutes. The column eluate may be filtered on a 0.2 μm filter.

The term "S/D plasma" encompasses plasma comprising a reduced concentration or activity of Plasmin Inhibitor, such as Plasmin Inhibitor level equal to or less than 0.60 IU/ml or equal to or less than 0.50 IU/ml, for example Plasmin Inhibitor level between 0.20 and 0.30 IU/ml, more specifically between 0.22 and 0.25 IU/ml.

When compared with fresh frozen plasma, S/D plasma may comprise a reduced amount and/or activity of one or more of plasmin inhibitor, protein S, Factor XI, Factor V, Factor VIII, Factor X, α2 antiplasmin, anti-trypsin, von Willebrand factor (vWF), and von Willebrand factor-cleaving protease (VWFCP) also known as disintegrin and metalloproteinase with a thrombospondin type 1 motif, member 13 (ADAMTS-13), tumor necrosis factor-alpha (TNFα), interleukin-8 (IL-8), interleukin-10 (IL-10) (Benjamin and McLaughlin, 2012, Svae et al., 2007; Beeck and Hellstern, 1998; Doyle et al., 2003; Mast et al., 1999, Theusinger et al., 2011) and/or may comprise an increased amount and/or activity of Factor VII (Doyle et al., 2003). Overall, S/D treatment can induce a reduction of procoagulant factors, although their levels remain within the normal range.

For example, S/D plasma is commercially available as Octaplas® (Octapharma AG, Lachen, Switzerland).

The term "serum" is as conventionally defined and comprises fresh serum, thawed frozen serum or serum prepared from plasma, or a mixture of any two or more thereof. Serum can be usually obtained from a sample of whole blood by first allowing clotting to take place in the sample and subsequently separating the so formed clot and cellular components of the blood sample from the liquid component (serum) by an appropriate technique, typically by centrifugation. Clotting can be facilitated by an inert catalyst, e.g., glass beads or powder. Alternatively, serum can be obtained from plasma by removing the anticoagulant and fibrin. By means of a specific example but not limitation, to obtain serum suitable for use in the present invention, a blood sample may be drawn into a vacutainer tube containing no anticoagulant (e.g., BD Vacutainer Plus plastic serum tube, 10 ml) and incubated for 30 to 45 min at room temperature to allow clotting. The tube is then centrifuged for 15 min at room temperature at 1,000-2,000 g to separate the serum from red blood cells. The supernatant (serum) is collected, optionally pooled (if a plurality of blood samples is used) and aliquoted into cryovials which are stored at -80°C until use. The term "serum" hence refers to an acellular composition which does not form part of a human or animal body.

The serum as intended herein is human serum, i.e., obtained from a single human subject or from a plurality of human subjects (e.g., serum mixed pool).

The serum may be preferably unprocessed serum, i.e., serum derived by separation from whole blood and not subjected to downstream processing steps which alter its chemical, biochemical, or cellular composition, other than optional heat inactivation, storage (cryogenic or non-cryogenic), sterilisation, freeze-drying and/or filtration.

The term "serum" may in certain embodiments specifically exclude processed serum, i.e., serum subjected after its separation from whole blood to one or more processing steps which alter its composition, specifically its chemical, biochemical, or cellular composition.

The serum may be used directly in the methods as taught herein. The serum can also be appropriately stored for later use (e.g., for shorter time periods, e.g., up to about 1-2 weeks, at a temperature above the freezing points of serum, but below ambient temperature, this temperature will usually be about 4°C to 5°C; or for longer times by freeze storage, usually at between about - 16°C and about -24°C, or at between about -70°C and about -80°C).

Optionally, the serum may also be sterilized prior to storage or use, using conventional microbiological filters, preferably with pore size of 0.2 $\mu$m or smaller.

In certain embodiments, the methods may employ serum which is autologous to the subject to be treated, and hence to the cells to be preserved in the composition comprising the serum. The term "autologous" with reference to serum denotes that the serum is obtained from the same subject to be contacted with the serum. In certain embodiments, the methods may employ serum which is "homologous" or "allogeneic" to the subject to be treated, and hence to the cells to be preserved in the composition comprising the serum, i.e., obtained from one or more (pooled) subjects other than the subject to be contacted with the serum. In certain embodiments, the methods may employ a mixture of autologous and homologous (allogeneic) sera as defined above. Particularly intended herein is human serum, more preferably allogeneic human serum for the *in vitro* preservation of human MSC or MSC-derived cells.

The serum can be heat inactivated as known in the art, particularly to remove the complement. Where the present methods employ serum autologous to the cells cultured in the presence thereof, it may be unnecessary to heat inactivate the serum. Where the serum is at least partly allogeneic to the cultured cells, it may be advantageous to heat inactivate the serum.

In certain embodiments, the serum may be obtained from solvent/detergent-treated plasma. The S/D plasma may be suitably treated to counter the action of the anticoagulant, such as to allow for conversion of fibrinogen into fibrin and the formation of the clot. For example, where the anticoagulant sequesters calcium ($Ca^{2+}$) ions, such as EDTA, citrate or oxalate, addition of a sufficient amount of a source of divalent calcium ($Ca^{2+}$) ions may be required. Suitable sources of divalent calcium ($Ca^{2+}$) ions include pharmaceutically acceptable calcium salt(s), preferably soluble calcium salt(s). Such $Ca^{2+}$ salts may be formed with inorganic or organic acids. Examples of such salts include calcium chloride ($CaCl_2$), calcium glycerophosphate, calcium phosphate, calcium hydrogen carbonate, calcium citrate, calcium sulphate, calcium lactate, calcium gluconate, calcium ascorbate, and mixtures thereof. Particularly preferred may be $CaCl_2$, which displays advantageously good solubility and is well-tolerated in injectable solutions.

The so-treated S/D plasma may be incubated at conditions conducive to formation of the clot, for example but without limitation, incubated for about 1 hour at 37°C, then for minimum 12 hours at - 20°C, followed by thawing, e.g., at 37°C. Subsequently, the serum is suitably separated from the clot, e.g., drawn using a syringe.

Optionally, prior to treating S/D plasma to obtain serum as taught above, an additional quantity (e.g., between about 5% v/v and about 20% v/v, preferably about 10% v/v) of serum, preferably human serum, more preferably autologous or allogeneic serum, may be mixed with the S/D plasma to facilitate clotting.

In certain particularly preferred embodiments of the methods or uses, as taught herein, the composition may be further supplemented (enriched) with one or more fractionated components of plasma or serum. In particular, an additional (surplus, extra) quantity of the one or more fractionated components of plasma or serum may be included in the composition. A particularly preferred example of such fractionated component of plasma or serum for inclusion in the composition is human serum albumin (HSA). By means of example but not limitation, the composition may be supplemented (enriched) with at least about 1% w/v (relative to the volume of the composition) of HSA (i.e., the composition will comprise at least about 1% w/v HSA in addition to any HSA present in the plasma or serum), such as at least about 5% w/v, or at least about 10% w/v, at least about 15% w/v, at least about 20% w/v, at least about 30% w/v, at least about 40% w/v, or at least about 50% w/v HSA. Both native (isolated from human blood) and recombinant versions of HSA having purity as high as 95% or 99% or higher are commercially available.

The concentration of the plasma or serum or the mixture thereof in the composition (i.e., relative to the volume of the composition) is at least 20% v/v, such as at least 25% v/v, at least 30% v/v, at least 35% v/v, at least 40% v/v, or at least 45% v/v. In certain embodiments of the methods, as taught herein, the concentration of the plasma or serum or the mixture thereof in the composition may be at least 50% v/v, such as at least 55% v/v. In certain embodiments, the concentration of the plasma or serum or the mixture thereof in the composition may be at least 60% v/v, such as at least 65% v/v. In certain embodiments, the concentration of the plasma or serum or the mixture thereof in the composition may be at least 70% v/v, such as at least 75% v/v. In certain embodiments, the concentration of the plasma or serum or the mixture thereof in the composition may be at least 80% v/v, such as at least 85% v/v. In certain embodiments, the concentration of the plasma or serum or the mixture thereof in the composition may be at least 90% v/v. In certain embodiments, the concentration of the plasma or serum or the mixture thereof in the composition may be at least 99-100% v/v.

In certain embodiments, a non-diluted and non-concentrated plasma product (e.g., fresh plasma, reconstituted freeze-dried plasma, solvent/detergent-treated plasma, fresh frozen plasma, and/or thawed plasma, or a mixture thereof) may be included in the composition at a concentration of at least 20% v/v of the plasma, or a non-diluted and non-concentrated serum product (e.g., fresh serum, thawed frozen serum, or serum prepared from plasma, or a mixture thereof) may be included in the composition at a concentration of at least 20% v/v of the serum, or a mixture of the non-diluted and non-concentrated plasma product and the non-diluted and non-concentrated serum product may be included in the composition at a concentration of at least 20% v/v of the mixture of plasma and serum.

In other embodiments, diluted plasma and/or serum products may be employed instead. Such diluted plasma and/or serum products are included in the composition at a concentration higher than the desired concentration of plasma and/or serum, such as to offset (counterbalance, compensate for) the dilution factor, thereby providing for a composition equivalent to one obtained by inclusion of at least 20% v/v of non-diluted plasma and/or serum product.

In yet further embodiments, concentrated plasma and/or serum products (e.g., plasma concentrates such as concentrates from frozen plasma) may be employed. Such concentrated plasma and/or serum products may be included in the composition at a concentration lower than the desired concentration of plasma and/or serum, such as to offset (counterbalance, compensate for) the concentration factor, thereby providing for a composition equivalent to one obtained by inclusion of at least 20% v/v of non-concentrated plasma and/or serum product. Alternatively, such concentrated plasma and/or serum products may be included in the composition at a concentration of at least 20% v/v, thereby providing for a composition equivalent to one obtained by inclusion of more than 20% v/v (depending on the concentration factor) of non-concentrated plasma and/or serum product.

Where the composition comprises a mixture of plasma and serum, exemplary concentrations of plasma and serum in the mixture (i.e., plasma and serum constituting 100% v/v of the mixture, and the mixture constituting at least 20% v/v of the composition) may be, for example, 1-10% v/v plasma and 90-99% v/v serum (e.g., 1% v/v plasma and 99% v/v serum, or 10% v/v plasma and 90% v/v serum), or 11-20% v/v plasma and 80-89% v/v serum (e.g., 11% v/v plasma and 89% v/v serum, or 20% v/v plasma and 80% v/v serum), or 21-30% v/v plasma and 70-79% v/v serum (e.g., 21% v/v plasma and 79% v/v serum, or 30% v/v plasma and 70% v/v serum), or 31-40% v/v plasma and 60-69% v/v serum (e.g., 31% v/v plasma and 69% v/v serum, or 40% v/v plasma and 60% v/v serum), or 41-50% v/v plasma and 50-59% v/v serum (e.g., 41% v/v plasma and 59% v/v serum, or 50% v/v plasma and 50% v/v serum), or 51-60% v/v plasma and 40-49% v/v serum (e.g., 51% v/v plasma and 49% v/v serum, or 60% v/v plasma and 40% v/v serum), or 61-70% v/v plasma and 30-39% v/v serum (e.g., 61% v/v plasma and 39% v/v serum, or 70% v/v plasma and 30% v/v serum), or 71-80% v/v plasma and 20-29% v/v serum (e.g., 71% v/v plasma and 29% v/v serum, or 80% v/v plasma and 20% v/v serum), or 81-90% v/v plasma and 10-19% v/v serum (e.g., 81% v/v plasma and 19% v/v serum, or 90% v/v plasma and 10% v/v serum), or 91-99% v/v plasma and 1-9% v/v serum (e.g., 91% v/v plasma and 9% v/v serum, or 99% v/v plasma and 1% v/v serum).

In certain embodiments of the methods, as taught herein, the concentration of the MSC or MSC-derived cells in the composition, and the concentration of the plasma or serum or the mixture thereof in the composition, may be as shown in Table 1 (each row of Table 1 providing an example of such an embodiment.

Table 1. Example embodiments of the compositions used in the present methods

| Concentration of MSC or MSC-derived cells in the composition (cells per mL of the composition) | Concentration of the plasma or serum or the mixture thereof in the composition (relative to the volume of the composition) |
| --- | --- |
| about $1 \times 10^4$ to about $1 \times 10^{11}$ | at least 20% v/v, e.g., at least 25% v/v |
| about $1 \times 10^4$ to about $1 \times 10^{11}$ | at least 30% v/v, e.g., at least 35% v/v |
| about $1 \times 10^4$ to about $1 \times 10^{11}$ | at least 40% v/v, e.g., at least 45% v/v |
| about $1 \times 10^4$ to about $1 \times 10^{11}$ | at least 50% v/v, e.g., at least 55% v/v |

(continued)

| Concentration of MSC or MSC-derived cells in the composition (cells per mL of the composition) | Concentration of the plasma or serum or the mixture thereof in the composition (relative to the volume of the composition) |
|---|---|
| about $1 \times 10^4$ to about $1 \times 10^{11}$ | at least 60% v/v, e.g., at least 65% v/v |
| about $1 \times 10^4$ to about $1 \times 10^{11}$ | at least 70% v/v, e.g., at least 75% v/v |
| about $1 \times 10^4$ to about $1 \times 10^{11}$ | at least 80% v/v, e.g., at least 85% v/v |
| about $1 \times 10^4$ to about $1 \times 10^{11}$ | at least 90% v/v, e.g., at least 95% v/v |
| about $1 \times 10^4$ to about $1 \times 10^{11}$ | 100% v/v |
| about $1 \times 10^5$ to about $1 \times 10^{10}$ | at least 20% v/v, e.g., at least 25% v/v |
| about $1 \times 10^5$ to about $1 \times 10^{10}$ | at least 30% v/v, e.g., at least 35% v/v |
| about $1 \times 10^5$ to about $1 \times 10^{10}$ | at least 40% v/v, e.g., at least 45% v/v |
| about $1 \times 10^5$ to about $1 \times 10^{10}$ | at least 50% v/v, e.g., at least 55% v/v |
| about $1 \times 10^5$ to about $1 \times 10^{10}$ | at least 60% v/v, e.g., at least 65% v/v |
| about $1 \times 10^5$ to about $1 \times 10^{10}$ | at least 70% v/v, e.g., at least 75% v/v |
| about $1 \times 10^5$ to about $1 \times 10^{10}$ | at least 80% v/v, e.g., at least 85% v/v |
| about $1 \times 10^5$ to about $1 \times 10^{10}$ | at least 90% v/v, e.g., at least 95% v/v |
| about $1 \times 10^5$ to about $1 \times 10^{10}$ | 100% v/v |
| about $1 \times 10^6$ to about $1 \times 10^9$ | at least 20% v/v, e.g., at least 25% v/v |
| about $1 \times 10^6$ to about $1 \times 10^9$ | at least 30% v/v, e.g., at least 35% v/v |
| about $1 \times 10^6$ to about $1 \times 10^9$ | at least 40% v/v, e.g., at least 45% v/v |
| about $1 \times 10^6$ to about $1 \times 10^9$ | at least 50% v/v, e.g., at least 55% v/v |
| about $1 \times 10^6$ to about $1 \times 10^9$ | at least 60% v/v, e.g., at least 65% v/v |
| about $1 \times 10^6$ to about $1 \times 10^9$ | at least 70% v/v, e.g., at least 75% v/v |
| about $1 \times 10^6$ to about $1 \times 10^9$ | at least 80% v/v, e.g., at least 85% v/v |
| about $1 \times 10^6$ to about $1 \times 10^9$ | at least 90% v/v, e.g., at least 95% v/v |
| about $1 \times 10^6$ to about $1 \times 10^9$ | 100% v/v |
| about $1 \times 10^7$ to about $1 \times 10^8$ | at least 20% v/v, e.g., at least 25% v/v |
| about $1 \times 10^7$ to about $1 \times 10^8$ | at least 30% v/v, e.g., at least 35% v/v |
| about $1 \times 10^7$ to about $1 \times 10^8$ | at least 40% v/v, e.g., at least 45% v/v |
| about $1 \times 10^7$ to about $1 \times 10^8$ | at least 50% v/v, e.g., at least 55% v/v |
| about $1 \times 10^7$ to about $1 \times 10^8$ | at least 60% v/v, e.g., at least 65% v/v |
| about $1 \times 10^7$ to about $1 \times 10^8$ | at least 70% v/v, e.g., at least 75% v/v |
| about $1 \times 10^7$ to about $1 \times 10^8$ | at least 80% v/v, e.g., at least 85% v/v |
| about $1 \times 10^7$ to about $1 \times 10^8$ | at least 90% v/v, e.g., at least 95% v/v |
| about $1 \times 10^7$ to about $1 \times 10^8$ | 100% v/v |
| about $2 \times 10^7$ to about $5 \times 10^7$ | at least 20% v/v, e.g., at least 25% v/v |
| about $2 \times 10^7$ to about $5 \times 10^7$ | at least 30% v/v, e.g., at least 35% v/v |
| about $2 \times 10^7$ to about $5 \times 10^7$ | at least 40% v/v, e.g., at least 45% v/v |
| about $2 \times 10^7$ to about $5 \times 10^7$ | at least 50% v/v, e.g., at least 55% v/v |

(continued)

| Concentration of MSC or MSC-derived cells in the composition (cells per mL of the composition) | Concentration of the plasma or serum or the mixture thereof in the composition (relative to the volume of the composition) |
| --- | --- |
| about $2 \times 10^7$ to about $5 \times 10^7$ | at least 60% v/v, e.g., at least 65% v/v |
| about $2 \times 10^7$ to about $5 \times 10^7$ | at least 70% v/v, e.g., at least 75% v/v |
| about $2 \times 10^7$ to about $5 \times 10^7$ | at least 80% v/v, e.g., at least 85% v/v |
| about $2 \times 10^7$ to about $5 \times 10^7$ | at least 90% v/v, e.g., at least 95% v/v |
| about $2 \times 10^7$ to about $5 \times 10^7$ | 100% v/v |
| about $2.5 \times 10^7$ | at least 20% v/v, e.g., at least 25% v/v |
| about $2.5 \times 10^7$ | at least 30% v/v, e.g., at least 35% v/v |
| about $2.5 \times 10^7$ | at least 40% v/v, e.g., at least 45% v/v |
| about $2.5 \times 10^7$ | at least 50% v/v, e.g., at least 55% v/v |
| about $2.5 \times 10^7$ | at least 60% v/v, e.g., at least 65% v/v |
| about $2.5 \times 10^7$ | at least 70% v/v, e.g., at least 75% v/v |
| about $2.5 \times 10^7$ | at least 80% v/v, e.g., at least 85% v/v |
| about $2.5 \times 10^7$ | at least 90% v/v, e.g., at least 95% v/v |
| about $2.5 \times 10^7$ | 100% v/v |

In certain embodiments of the methods, as taught herein, the composition may consist essentially of or may consist of i) the MSC or MSC-derived cells and ii) the human plasma or human serum or the mixture thereof.

Preferably, the invention provides a method as recited in the appended claims for non-cryogenic *in vitro* preservation of cells. Accordingly, the composition may be maintained (at a temperature) above the composition's freezing point. In certain embodiments of the methods, as taught herein, the composition may be maintained at or above about 0.1°C (e.g., about 0.10°C), or at or above about 1°C. In certain embodiments, the composition may be maintained at or above about 2°C, e.g., at or above about 3°C, or at or above about 4°C, or at or above about 5°C, or at or above about 6°C, or at or above about 7°C. In certain embodiments, the composition may be maintained at or above about 8°C, e.g., at or above about 9°C. In certain embodiments, the composition may be maintained at or above about 10°C, e.g., at or above about 11°C, or at or above about 12°C, or at or above about 13°C, or at or above about 14°C. In certain embodiments, the composition may be maintained at or above about 15°C, e.g., at or above about 16°C, or at or above about 17°C, or at or above about 18°C, or at or above about 19°C. In certain embodiments, the composition may be maintained at or above about 20°C.

As taught herein, the composition may be maintained at or below ambient temperature (i.e., "room temperature"). In certain embodiments of the methods, as taught herein, the composition may be maintained at or below about 25°C, e.g., at or below about 24°C, or at or below about 23°C, or at or below about 22°C, or at or below about 21°C. In certain embodiments, the composition may be maintained at or below about 20°C, e.g., at or below about 19°C. In certain embodiments, the composition may be maintained at or below about 18°C, e.g., at or below about 17°C, or at or below about 16°C. In certain embodiments, the composition may be maintained at or below about 15°C, e.g., at or below about 14°C, or at or below about 13°C, or at or below about 12°C, or at or below about 11°C. In certain embodiments, the composition may be maintained at or below about 10°C, e.g., at or below about 9°C. In certain embodiments, the composition may be maintained at or below about 8°C, e.g., at or below about 7°C, or at or below about 6°C, or at or below about 5°C, or at or below about 4°C, or at or below about 3°C, or at or below about 2°C, or at or below about 1°C.

As taught herein, the composition may be maintained at between about 0°C and ambient temperature. As taught herein, the composition may be maintained at between about 0°C and about 25°C, or between about 0°C and about 18°C, or between about 0°C and about 15°C. In certain embodiments, the composition may be maintained at between about 0°C and about 10°C. In certain embodiments, the composition may be maintained at between about 0°C and about 8°C. In certain embodiments, the composition may be maintained at between about 1°C and about 8°C.

As taught herein, the composition may be maintained at between about 0.1°C (e.g., about 0.10°C) and ambient temperature. In certain embodiments of the methods, as taught herein, the composition may be maintained at between about 0.1°C (e.g., about 0.10°C) and about 25°C, or between about 0.1°C (e.g., about 0.10°C) and about 18°C, or between about 0.1°C (e.g., about 0.10°C) and about 15°C. In certain embodiments, the composition may be maintained at between about 0.1°C (e.g., about 0.10°C) and about 10°C. In certain embodiments, the composition may be maintained at between about 0.1°C (e.g., about 0.10°C) and about 8°C.

As taught herein, the composition may be maintained above the composition's freezing point and at or below ambient temperature (i.e., "room temperature"). As taught herein, the composition may be maintained above the composition's freezing point and at or below about 25°C, or above the composition's freezing point and at or below about 20°C, or above the composition's freezing point and at or below about 18°C, or above the composition's freezing point and at or below about 15°C. In certain embodiments, the composition may be maintained above the composition's freezing point and at or below about 10°C. The composition may be maintained above the composition's freezing point and at or below about 8°C.

As taught herein, the composition may be maintained at between about 0°C and ambient temperature. As taught herein, the composition may be maintained at between about 0.1°C (e.g., about 0.10°C) and ambient temperature, or between about 1°C and ambient temperature, or between about 2°C and ambient temperature. The composition may be maintained at between about 8°C and ambient temperature. The composition may be maintained at between about 15°C and ambient temperature.

In certain embodiments of the methods, as taught herein, the composition may be maintained at between about 2°C and about 8°C.

In certain embodiments of the methods, as taught herein, the composition may be maintained at between about 8°C and about 15°C.

In certain embodiments of the methods, as taught herein, the composition may be maintained at between about 15°C and about 25°C.

In certain embodiments of the methods, as taught herein, the composition may be maintained for at least 8 hours, preferably at least 16 hours, more preferably at least 24 hours. In certain embodiments, the composition may be maintained for at least 30 hours. In certain embodiments, the composition may be maintained for at least 36 hours. In certain embodiments of the methods, as taught herein, the composition may be maintained for at least 42 hours.

In certain embodiments of the methods, as taught herein, the composition may be maintained for at least 48 hours. In certain embodiments of the methods, as taught herein, the composition may be maintained for at least 72 hours. In certain embodiments, the composition may be maintained for at least 96 hours. In certain embodiments, the composition may be maintained for at least 120 hours. In certain embodiments, the composition may be maintained for at least 144 hours. In certain embodiments, the composition may be maintained for at least 192 hours.

As taught herein, the composition may be maintained at between about 0.1°C (e.g., about 0.10°C) and ambient temperature for at least 48 hours. In certain embodiments of the methods, as taught herein, the composition may be maintained at between about 0.1°C (e.g., about 0.10°C) and about 25°C for at least 48 hours. The composition may be maintained at between about 0.1°C (e.g., about 0.10°C) and ambient temperature for at least 72 hours. In certain embodiments, the composition may be maintained at between about 0.1°C (e.g., about 0.10°C) and about 25°C for at least 72 hours. The composition may be maintained at between about 0.1°C (e.g., about 0.10°C) and ambient temperature for at least 96 hours. In certain embodiments, the composition may be maintained at between about 0.1°C (e.g., about 0.10°C) and about 25°C for at least 96 hours. The composition may be maintained at between about 0.1°C (e.g., about 0.10°C) and ambient temperature for at least 120 hours. In certain embodiments, the composition may be maintained at between about 0.1°C (e.g., about 0.10°C) and about 25°C for at least 120 hours. The composition may be maintained at between about 0.1°C (e.g., about 0.10°C) and ambient temperature for at least 144 hours. In certain embodiments, the composition may be maintained at between about 0.1°C (e.g., about 0.10°C) and about 25°C for at least 144 hours. The composition may be maintained at between about 0.1°C (e.g., about 0.10°C) and ambient temperature for at least 168 hours. In certain embodiments, the composition may be maintained at between about 0.1°C (e.g., about 0.10°C) and about 25°C for at least 168 hours. The composition may be maintained at between about 0.1°C (e.g., about 0.10°C) and ambient temperature for at least 192 hours. In certain embodiments, the composition may be maintained at between about 0.1°C (e.g., about 0.10°C) and about 25°C for at least 192 hours.

As taught herein, the composition may be maintained at or below ambient temperature for at least 48 hours, or for at least 72 hours, or for at least 96 hours, or for at least 120 hours. The composition may be maintained at or below ambient temperature for at least 144 hours, or for at least 168 hours, or for at least 192 hours.

As taught herein, the composition may be maintained at between about 0.1°C (e.g., about 0.10°C) and ambient temperature for at least 48 hours, or for at least 72 hours, or for at least 96 hours, or for at least 120 hours. The composition may be maintained at between about 0.1°C (e.g., about 0.10°C) and ambient temperature for at least 144 hours, or for at least 168 hours, or for at least 192 hours.

In certain embodiments of the methods, as taught herein, the composition may be maintained at between about 2°C and about 8°C for at least 48 hours. In certain embodiments, the composition may be maintained at between about 2°C and about 8°C for at least 72 hours. In certain embodiments, the composition may be maintained at between about 2°C and about 8°C for at least 96 hours. In certain embodiments, the composition may be maintained at between about 2°C and about 8°C for at least 120 hours. In certain embodiments, the composition may be maintained at between about 2°C and about 8°C for at least 144 hours. In certain embodiments, the composition may be maintained at between about 2°C and about 8°C for at least 168 hours. In certain embodiments, the composition may be maintained at between about 2°C and about 8°C for at least 192 hours.

In certain embodiments of the methods, as taught herein, the composition may be maintained at between about 8°C and about 15°C for at least 48 hours. In certain embodiments, the composition may be maintained at between about 8°C and about 15°C for at least 72 hours. In certain embodiments, the composition may be maintained at between about 8°C and about 15°C for at least 96 hours. In certain embodiments, the composition may be maintained at between about 8°C and about 15°C for at least 120 hours. In certain embodiments, the composition may be maintained at between about 8°C and about 15°C for at least 144 hours. In certain embodiments, the composition may be maintained at between about 8°C and about 15°C for at least 168 hours. In certain embodiments, the composition may be maintained at between about 8°C and about 15°C for at least 192 hours.

As taught herein, the composition may be maintained at between about 15°C and ambient temperature for at least 48 hours. In certain embodiments of the methods, as taught herein, the composition may be maintained at between about 15°C and about 25°C for at least 48 hours. The composition may be maintained at between about 15°C and ambient temperature for at least 72 hours. In certain embodiments, the composition may be maintained at between about 15°C and about 25°C for at least 72 hours. The composition may be maintained at between about 15°C and ambient temperature for at least 96 hours. In certain embodiments, the composition may be maintained at between about 15°C and about 25°C for at least 96 hours. The composition may be maintained at between about 15°C and ambient temperature for at least 120 hours. In certain embodiments, the composition may be maintained at between about 15°C and about 25°C for at least 120 hours. The composition may be maintained at between about 15°C and ambient temperature for at least 144 hours. In certain embodiments, the composition may be maintained at between about 15°C and about 25°C for at least 144 hours. The composition may be maintained at between about 15°C and ambient temperature for at least 168 hours. In certain embodiments, the composition may be maintained at between about 15°C and about 25°C for at least 168 hours. The composition may be maintained at between about 15°C and ambient temperature for at least 192 hours. In certain embodiments, the composition may be maintained at between about 15°C and about 25°C for at least 192 hours.

Temperature, as used in the context of the present invention, is expressed in degrees Celsius (°C). It is to be noted however that temperature may also be expressed in any other suitable unit such as Kelvin (K).

It is noted that temperature is rounded to the nearest one. For example, 8.1°C, 8.2°C, 8.3°C, and 8.4°C is rounded down to 8°C, while 8.5°C, 8.6°C, 8.7°C, 8.8°C, and 8.9°C is rounded up to 9 °C. Reference to a temperature value not followed by any decimal place also particularly comprises that same value followed by 0 at the first decimal place, e.g., reference to 8°C particularly encompasses 8.0°C.

Time, as used in the context of the present invention, is expressed in hours or days. It is to be noted however that time may also be expressed in other units such as seconds or minutes.

It is noted that time in hours is rounded to the nearest one. For example, 24.1 hours (24 hours 6 minutes), 24.2 hours (24 hours 12 minutes), 24.3 hours (24 hours 18 minutes), 24.4 hours (24 hours 24 minutes) is rounded down to 24 hours, while 24.5 hours (24 hours 30 minutes), 24.6 hours (24 hours 36 minutes), 24.7 hours (24 hours 42 minutes), 24.8 hours (24 hours 48 minutes), and 24.9 hours (24 hours 54 minutes) is rounded up to 25 hours. Reference to a time period not followed by any decimal place also particularly comprises that same value followed by 0 at the first decimal place, e.g., reference to 24 hours particularly encompasses 24.0 hours.

The terms "time", "time period", and "time duration" may be used interchangeably.

The terms "24 hours" and "1 day" may be used interchangeably. The terms "48 hours" and "2 days" may be used interchangeably. The terms "72 hours" and "3 days" may be used interchangeably. The terms "96 hours" and "4 days" may be used interchangeably. The terms "120 hours" and "5 days" may be used interchangeably. The terms "144 hours" and "6 days" may be used interchangeably. The terms "168 hours" and "7 days" may be used interchangeably. The terms "192 hours" and "8 days" may be used interchangeably.

In certain embodiments of the methods, as taught herein, the composition may be maintained at a temperature as described in Table 2 and for a time period as described in Table 2. In certain embodiments, the composition may be maintained at a temperature ($T_x$) as described in Table 2 and for a time period ($t_x$) as described in Table 2. In certain embodiments of the methods, as taught herein, the composition may be maintained at any one of temperatures $T_1$, $T_2$, $T_3$, $T_4$, $T_5$, $T_6$, $T_7$, $T_8$, $T_9$, $T_{10}$, $T_{11}$, $T_{12}$, $T_{13}$, $T_{14}$, $T_{15}$, $T_{16}$, $T_{17}$, $T_{18}$, $T_{19}$, $T_{20}$, $T_{21}$ or $T_{22}$ as described in Table 2 and for any one of time periods $t_1$, $t_2$, $t_3$, $t_4$, $t_5$, $t_6$, $t_7$, $t_8$, $t_9$, $t_{10}$, $t_{11}$, or $t_{12}$ as described in Table 2. For example, the composition may be maintained at a temperature $T_1$ as described in Table 2 and for a time period $t_1$ as described in Table 2.

The recitation "at a temperature $T_x$ as described in Table 2 and for a time period $t_x$ as described in Table 2" refers to any one or more combinations, such as all combinations, of temperatures and time periods as described in Table 2, and in particular the combinations specified in each field of Table 2 by the expression "$T_x + t_x$".

Table 2: Combinations of a temperature and a time period for maintaining the compositions as taught herein

| Time period, $t_x$ / Temperature, $T_x$ | $t_1$: at least 24 h | $t_2$: at least 30 h | $t_3$: at least 36 h | $t_4$: at least 42 h | $t_5$: at least 48 h | $t_6$: at least 72 h | $t_7$: at least 84 h | $t_8$: at least 96 h | $t_9$: at least 120 h | $t_{10}$: at least 144 h | $t_{11}$: at least 168 h | $t_{12}$: at least 192 h |
|---|---|---|---|---|---|---|---|---|---|---|---|---|
| $T_1$: between about 0 °C (e.g., about 0.1°C, e.g., about 0.10°C) and about 18 °C | $T_1 + t_1$ | $T_1 + t_2$ | $T_1 + t_3$ | $T_1 + t_4$ | $T_1 + t_5$ | $T_1 + t_6$ | $T_1 + t_7$ | $T_1 + t_8$ | $T_1 + t_9$ | $T_1 + t_{10}$ | $T_1 + t_{11}$ | $T_1 + t_{12}$ |
| $T_2$: between about 0 °C (e.g., about 0.1°C, e.g., about 0.10°C) and about 15 °C | $T_2 + t_1$ | $T_2 + t_2$ | $T_2 + t_3$ | $T_2 + t_4$ | $T_2 + t_5$ | $T_2 + t_6$ | $T_2 + t_7$ | $T_2 + t_8$ | $T_2 + t_9$ | $T_2 + t_{10}$ | $T_2 + t_{11}$ | $T_2 + t_{12}$ |
| $T_3$: between about 0 °C (e.g., about 0.1°C, e.g., about 0.10°C) and about 10 °C | $T_3 + t_1$ | $T_3 + t_2$ | $T_3 + t_3$ | $T_3 + t_4$ | $T_3 + t_5$ | $T_3 + t_6$ | $T_3 + t_7$ | $T_3 + t_8$ | $T_3 + t_9$ | $T_3 + t_{10}$ | $T_3 + t_{11}$ | $T_3 + t_{12}$ |
| $T_4$: between about 0 °C (e.g., about 0.1°C, e.g., about 0.10°C) and about 12 °C | $T_4 + t_1$ | $T_4 + t_2$ | $T_4 + t_3$ | $T_4 + t_4$ | $T_4 + t_5$ | $T_4 + t_6$ | $T_4 + t_7$ | $T_4 + t_8$ | $T_4 + t_9$ | $T_4 + t_{10}$ | $T_4 + t_{11}$ | $T_4 + t_{12}$ |
| $T_5$: between about 0 °C (e.g., about 0.1°C, e.g., about 0.10°C) and about 8 °C | $T_5 + t_1$ | $T_5 + t_2$ | $T_5 + t_3$ | $T_5 + t_4$ | $T_5 + t_5$ | $T_5 + t_6$ | $T_5 + t_7$ | $T_5 + t_8$ | $T_5 + t_9$ | $T_5 + t_{10}$ | $T_5 + t_{11}$ | $T_5 + t_{12}$ |
| $T_6$: between about 1 °C and about 18 °C | $T_6 + t_1$ | $T_6 + t_2$ | $T_6 + t_3$ | $T_6 + t_4$ | $T_6 + t_5$ | $T_6 + t_6$ | $T_6 + t_7$ | $T_6 + t_8$ | $T_6 + t_9$ | $T_6 + t_{10}$ | $T_6 + t_{11}$ | $T_6 + t_{12}$ |
| $T_7$: between about 1 °C and about 15 °C | $T_7 + t_1$ | $T_7 + t_2$ | $T_7 + t_3$ | $T_7 + t_4$ | $T_7 + t_5$ | $T_7 + t_6$ | $T_7 + t_7$ | $T_7 + t_8$ | $T_7 + t_9$ | $T_7 + t_{10}$ | $T_7 + t_{11}$ | $T_7 + t_{12}$ |
| $T_8$: between about 1 °C and about 12 °C | $T_8 + t_1$ | $T_8 + t_2$ | $T_8 + t_3$ | $T_8 + t_4$ | $T_8 + t_5$ | $T_8 + t_6$ | $T_8 + t_7$ | $T_8 + t_8$ | $T_8 + t_9$ | $T_8 + t_{10}$ | $T_8 + t_{11}$ | $T_8 + t_{12}$ |
| $T_9$: between about 1 °C and about 10 °C | $T_9 + t_1$ | $T_9 + t_2$ | $T_9 + t_3$ | $T_9 + t_4$ | $T_9 + t_5$ | $T_9 + t_6$ | $T_9 + t_7$ | $T_9 + t_8$ | $T_9 + t_9$ | $T_9 + t_{10}$ | $T_9 + t_{11}$ | $T_9 + t_{12}$ |
| $T_{10}$: between about 1 °C and about 8 °C | $T_{10} + t_1$ | $T_{10} + t_2$ | $T_{10} + t_3$ | $T_{10} + t_4$ | $T_{10} + t_5$ | $T_{10} + t_6$ | $T_{10} + t_7$ | $T_{10} + t_8$ | $T_{10} + t_9$ | $T_{10} + t_{10}$ | $T_{10} + t_{11}$ | $T_{10} + t_{12}$ |
| $T_{11}$: between about 2 °C and about 18 °C | $T_{11} + t_1$ | $T_{11} + t_2$ | $T_{11} + t_3$ | $T_{11} + t_4$ | $T_{11} + t_5$ | $T_{11} + t_6$ | $T_{11} + t_7$ | $T_{11} + t_8$ | $T_{11} + t_9$ | $T_{11} + t_{10}$ | $T_{11} + t_{11}$ | $T_{11} + t_{12}$ |
| $T_{12}$: between about 2 °C and about 15 °C | $T_{12} + t_1$ | $T_{12} + t_2$ | $T_{12} + t_3$ | $T_{12} + t_4$ | $T_{12} + t_5$ | $T_{12} + t_6$ | $T_{12} + t_7$ | $T_{12} + t_8$ | $T_{12} + t_9$ | $T_{12} + t_{10}$ | $T_{12} + t_{11}$ | $T_{12} + t_{12}$ |
| $T_{13}$: between about 2 °C and about 12 °C | $T_{13} + t_1$ | $T_{13} + t_2$ | $T_{13} + t_3$ | $T_{13} + t_4$ | $T_{13} + t_5$ | $T_{13} + t_6$ | $T_{13} + t_7$ | $T_{13} + t_8$ | $T_{13} + t_9$ | $T_{13} + t_{10}$ | $T_{13} + t_{11}$ | $T_{13} + t_{12}$ |
| $T_{14}$: between about 2 °C and about 10 °C | $T_{14} + t_1$ | $T_{14} + t_2$ | $T_{14} + t_3$ | $T_{14} + t_4$ | $T_{14} + t_5$ | $T_{14} + t_6$ | $T_{14} + t_7$ | $T_{14} + t_8$ | $T_{14} + t_9$ | $T_{14} + t_{10}$ | $T_{14} + t_{11}$ | $T_{14} + t_{12}$ |
| $T_{15}$: between about 2 °C | $T_{15} +$ | $T_{15} +$ | $T_{15} +$ | $T_{15} +$ | $T_{15} +$ | $T_{15} +$ | $T_{15} +$ | $T_{15} +$ | $T_{15} +$ | $T_{15} +$ | $T_{15} +$ | $T_{15} +$ |

| Time period, $t_x$ / Temperature, $T_x$ | $t_1$: at least 24 h | $t_2$: at least 30 h | $t_3$: at least 36 h | $t_4$: at least 42 h | $t_5$: at least 48 h | $t_6$: at least 72 h | $t_7$: at least 84 h | $t_8$: at least 96 h | $t_9$: at least 120 h | $t_{10}$: at least 144 h | $t_{11}$: at least 168 h | $t_{12}$: at least 192 h |
|---|---|---|---|---|---|---|---|---|---|---|---|---|
| and about 8 °C | $t_1$ | $t_2$ | $t_3$ | $t_4$ | $t_5$ | $t_6$ | $t_7$ | $t_8$ | $t_9$ | $t_{10}$ | $t_{11}$ | $t_{12}$ |
| $T_{16}$: between about 0 °C (e.g., about 0.1°C, e.g., about 0.10°C) and about 25 °C | $T_{16}$ + $t_1$ | $T_{16}$ + $t_2$ | $T_{16}$ + $t_3$ | $T_{16}$ + $t_4$ | $T_{16}$ + $t_5$ | $T_{16}$ + $t_6$ | $T_{16}$ + $t_7$ | $T_{16}$ + $t_8$ | $T_{16}$ + $t_9$ | $T_{16}$ + $t_{10}$ | $T_{16}$ + $t_{11}$ | $T_{16}$ + $t_{12}$ |
| $T_{17}$: between about 15 °C and about 25 °C | $T_{17}$ + $t_1$ | $T_{17}$ + $t_2$ | $T_{17}$ + $t_3$ | $T_{17}$ + $t_4$ | $T_{17}$ + $t_5$ | $T_{17}$ + $t_6$ | $T_{17}$ + $t_7$ | $T_{17}$ + $t_8$ | $T_{17}$ + $t_9$ | $T_{17}$ + $t_{10}$ | $T_{17}$ + $t_{11}$ | $T_{17}$ + $t_{12}$ |
| $T_{18}$: between about 8 °C and about 15 °C | $T_{18}$ + $t_1$ | $T_{18}$ + $t_2$ | $T_{18}$ + $t_3$ | $T_{18}$ + $t_4$ | $T_{18}$ + $t_5$ | $T_{18}$ + $t_6$ | $T_{18}$ + $t_7$ | $T_{18}$ + $t_8$ | $T_{18}$ + $t_9$ | $T_{18}$ + $t_{10}$ | $T_{18}$ + $t_{11}$ | $T_{18}$ + $t_{12}$ |
| $T_{19}$: at or below ambient temperature | $T_{19}$ + $t_1$ | $T_{19}$ + $t_2$ | $T_{19}$ + $t_3$ | $T_{19}$ + $t_4$ | $T_{19}$ + $t_5$ | $T_{19}$ + $t_6$ | $T_{19}$ + $t_7$ | $T_{19}$ + $t_8$ | $T_{19}$ + $t_9$ | $T_{19}$ + $t_{10}$ | $T_{19}$ + $t_{11}$ | $T_{19}$ + $t_{12}$ |
| $T_{20}$: above the composition's freezing point and at or below ambient temperature | $T_{20}$ + $t_1$ | $T_{20}$ + $t_2$ | $T_{20}$ + $t_3$ | $T_{20}$ + $t_4$ | $T_{20}$ + $t_5$ | $T_{20}$ + $t_6$ | $T_{20}$ + $t_7$ | $T_{20}$ + $t_8$ | $T_{20}$ + $t_9$ | $T_{20}$ + $t_{10}$ | $T_{20}$ + $t_{11}$ | $T_{20}$ + $t_{12}$ |
| $T_{21}$: between about 0 °C (e.g., about 0.1°C, e.g., about 0.10°C) and ambient temperature | $T_{21}$ + $t_1$ | $T_{21}$ + $t_2$ | $T_{21}$ + $t_3$ | $T_{21}$ + $t_4$ | $T_{21}$ + $t_5$ | $T_{21}$ + $t_6$ | $T_{21}$ + $t_7$ | $T_{21}$ + $t_8$ | $T_{21}$ + $t_9$ | $T_{21}$ + $t_{10}$ | $T_{21}$ + $t_{11}$ | $T_{21}$ + $t_{12}$ |
| $T_{22}$: between about 15 °C and ambient temperature | $T_{22}$ + $t_1$ | $T_{22}$ + $t_2$ | $T_{22}$ + $t_3$ | $T_{22}$ + $t_4$ | $T_{22}$ + $t_5$ | $T_{22}$ + $t_6$ | $T_{22}$ + $t_7$ | $T_{22}$ + $t_8$ | $T_{22}$ + $t_9$ | $T_{22}$ + $t_{10}$ | $T_{22}$ + $t_{11}$ | $T_{22}$ + $t_{12}$ |

As mentioned before, the present invention relates to a method as recited in the appended claims for *in vitro* preservation of cells comprising maintaining adherent MSC or adherent MSC-derived cells in suspension in a composition comprising at least 20% v/v human plasma or human serum or a mixture thereof. In particular, the composition may be so maintained at a temperature and for a time as discussed above.

The recitation "maintaining a composition at between a given temperature (such as about 0°C) and another given temperature (such as about 25°C) for at least a given time period (such as 24 hours)" as used herein refers to ensuring that the temperature of the composition remains (i.e., is maintained, kept, or controlled) between said temperatures for at least the recited time period.

To control the temperature of the composition, the composition may be conveniently exposed to an environment having the desired temperature, e.g., a temperature between about 0°C (e.g., about 0.1°C, e.g., about 0.10°C) and ambient temperature or a temperature between about 0°C (e.g., about 0.1°C, e.g., about 0.10°C) and about 25°C, for a desired time period.

In certain embodiments, the composition may be exposed to an environment having a temperature between about 0.1°C (e.g., about 0.10°C) and about 18°C, between about 0.1°C (e.g., about 0.10°C) and about 15°C, between about 0.1°C (e.g., about 0.10°C) and about 12°C, between about 0.1°C (e.g., about 0.10°C) and about 10°C, between about 0.1°C (e.g., about 0.10°C) and about 8°C, temperature between about 1°C and about 18°C, between about 1°C and about 15°C, between about 1°C and about 12°C, between about 1°C and about 10°C, between about 1°C and about 8°C, temperature between about 2°C and about 18°C, between about 2°C and about 15°C, between about 2°C and about 12°C, between about 2°C and about 10°C, or between about 2°C and about 8°C, or between about 0.1°C (e.g., about 0.10°C) and about 25 °C, or between about 15°C and about 25°C, or between about 8 °C and about 15 °C, for a time period effective to maintain the composition at $T_x$ as described in Table 2 and for $t_x$ as described in Table 2.

The composition may be exposed to an environment having a temperature between about 0°C (e.g., about 0.1°C, e.g., about 0.10°C) and ambient temperature, for a time period effective to maintain the composition at between about 0°C (e.g., about 0.1°C, e.g., about 0.10°C) and ambient temperature for at least 24 hours, or for at least 30 hours, or for at least 36 hours, or for at least 42 hours, or for at least 48 hours, or for at least 72 hours, or for at least 84 hours, or for at least 96 hours, or for at least 120 hours, or for at least 144 hours, or for at least 168 hours, or for at least 192 hours.

In certain embodiments, the composition may be exposed to an environment having a temperature between about 2°C and about 8°C, for a time period effective to maintain the composition at between about 2°C and about 8°C for at least 24 hours, or for at least 30 hours, or for at least 36 hours, or for at least 42 hours, or for at least 48 hours, or for at least 72 hours, or for at least 84 hours, or for at least 96 hours, or for at least 120 hours, or for at least 144 hours, or for at least 168 hours, or for at least 192 hours.

The composition may be exposed to an environment having a temperature between about 15°C and ambient temperature, for a time period effective to maintain the composition at between about 15°C and ambient temperature for at least 24 hours, or for at least 30 hours, or for at least 36 hours, or for at least 42 hours, or for at least 48 hours, or for at least 72 hours, or for at least 84 hours, or for at least 96 hours, or for at least 120 hours, or for at least 144 hours, or for at least 168 hours, or for at least 192 hours.

In certain embodiments, the composition may be exposed to an environment having a temperature between about 15°C and about 25°C, for a time period effective to maintain the composition at between about 15°C and about 25°C for at least 24 hours, or for at least 30 hours, or for at least 36 hours, or for at least 42 hours, or for at least 48 hours, or for at least 72 hours, or for at least 84 hours, or for at least 96 hours, or for at least 120 hours, or for at least 144 hours, or for at least 168 hours, or for at least 192 hours.

In certain embodiments, the composition may be exposed to an environment having a temperature between about 8°C and about 15°C, for a time period effective to maintain the composition at between about 8°C and about 15°C for at least 24 hours, or for at least 30 hours, or for at least 36 hours, or for at least 42 hours, or for at least 48 hours, or for at least 72 hours, or for at least 84 hours, or for at least 96 hours, or for at least 120 hours, or for at least 144 hours, or for at least 168 hours, or for at least 192 hours.

The composition may be exposed to an environment having a temperature between about 0°C (e.g., about 0.1°C, e.g., about 0.10°C) and ambient temperature, for a time period effective to maintain the composition at between about 0°C (e.g., about 0.1°C, e.g., about 0.10°C) and ambient temperature for at least 24 hours.

In certain embodiments, the composition may be exposed to an environment having a temperature between about 2°C and about 8°C, for a time period effective to maintain the composition at between about 2°C and about 8°C for at least 24 hours.

The composition may be exposed to an environment having a temperature between about 15°C and ambient temperature, for a time period effective to maintain the composition at between about 15°C and ambient temperature for at least 24 hours.

In certain embodiments, the composition may be exposed to an environment having a temperature between about 15°C and about 25°C, for a time period effective to maintain the composition at between about 15°C and about 25°C for at least 24 hours.

In certain embodiments, the composition may be exposed to an environment having a temperature between about 8°C and about 15°C, for a time period effective to maintain the composition at between about 8°C and about 15°C for at least 24 hours.

The environment having temperature as stated above may be suitably created or generated by any manner, e.g., any conventional means of temperature control. For instance, temperatures in the range of about 20°C to about 25°C correspond to ambient temperature conditions (i.e., "room temperature"), such that no dedicated means of temperature control may be necessary to maintain the composition at such temperatures. To maintain the composition at temperatures lower than ambient temperature, any conventional means of refrigeration may be employed, such as for example, common household refrigerators, industrial refrigerators, temperature controlled refrigerators, transportable cooling systems (e.g., cool box), etc.

One shall understand that in the course of a desired time period during which the temperature of the composition is maintained within a desired range, the composition may be transiently exposed to an environment having a temperature outside of said range. For example, the composition may be transiently removed from a refrigerated environment to allow for its inspection, manipulation, packaging, labelling, etc.; or the composition may be briefly removed from one refrigerated environment and placed into another refrigerated environment. The transient nature of such exposure, however, means that the temperature of the composition remains within the desired range.

Hence, provided that the temperature of the composition is maintained between about 0°C (e.g., about 0.1°C, e.g., about 0.10°C) and ambient temperature for at least 24 hours, the composition may be exposed to an environment having a temperature lower than about 0°C or higher than ambient temperature for one or more time periods in the course of said at least 24 hours.

In certain embodiments, provided that the temperature of the composition is maintained between about 0.1°C (e.g., about 0.10°C) and about 25°C for at least 24 hours, the composition may be exposed to an environment having a temperature lower than about 0°C or higher than about 25°C for one or more time periods in the course of said at least 24 hours.

In certain embodiments, provided that the temperature of the composition is maintained at temperature $T_x$ as described in Table 2 and for time period $t_x$ as described in Table 2, the composition may be exposed to an environment having a temperature lower or higher than $T_x$ (e.g., room temperature) for one or more time periods in the course of said time period $t_x$.

In certain embodiments, provided that the temperature of the composition is maintained at between about 2°C and about 8 °C for at least 24 hours, or for at least 30 hours, or for at least 36 hours, or for at least 42 hours, or for at least 48 hours, or for at least 72 hours, or for at least 84 hours, or for at least 96 hours, or for at least 120 hours, or for at least 144 hours, or for at least 168 hours, or for at least 192 hours, the composition may be exposed to an environment having a temperature lower than about 2 °C or higher than about 8 °C (e.g., room temperature) for one or more time periods in the course of said at least 24, 30, 36, 42, 48, 72, 84, 96, 120, 144, 168, or 192 hours.

In certain embodiments, provided that the temperature of the composition is maintained at between about 2°C and about 8 °C for at least 24 hours, the composition may be exposed to an environment having a temperature lower than about 2 °C and/or higher than about 8 °C (e.g., room temperature) for one or more time periods in the course of said at least 24 hours.

The methods as taught herein are particularly suited for *in vitro* preserving the MSC or MSC-derived cells, such as during storage of the composition and/or transportation of the composition, for instance from the place of production of the composition (e.g., a cell therapy company) to the place of use of the composition (e.g., a hospital). Preferably, when the MSC or MSC-derived cells are maintained as taught herein, less than 20%, more preferably less than 15%, even more preferably less than 10% of the cells may lose viability compared to the composition at the outset of the method.

The present methods for *in vitro* preservation of MSC or MSC-derived cells thus allow to adequately retain the viability of the MSC or MSC-derived cells.

In certain embodiments, the method may comprise: a) providing the composition comprising (i) the MSC or MSC-derived cells and (ii) the human plasma or human serum or the mixture thereof, optionally wherein said providing comprises a1) culturing the MSC or MSC-derived cells and a2) suspending the MSC or MSC-derived cells with at least the human plasma or human serum or the mixture thereof; and b) maintaining the composition, so as to effect preservation of the cells, e.g., maintaining the composition at between about 0.1°C (e.g., about 0.10°C) and about 25°C for at least 24 hours.

In certain embodiments, the method may comprise: a) providing the composition comprising (i) the MSC or MSC-derived cells and (ii) the human plasma or human serum or the mixture thereof, wherein said providing comprises a1) collecting the MSC or MSC-derived cells and a2) suspending the MSC or MSC-derived cells with at least the human plasma or human serum or the mixture thereof; and b) maintaining the composition, so as to effect preservation of the cells, e.g., maintaining the composition at between about 0.1°C (e.g., about 0.10°C) and about 25°C for at least 24 hours.

In certain embodiments, the methods as taught herein may concern culturing (e.g., maintaining, propagating and/or differentiating) MSC or MSC-derived cells in the presence of cell or tissue culture media as known *per se,* such as for example using liquid cell or tissue culture media. Such culture media can desirably sustain the maintenance (e.g., survival, genotypic, phenotypic and/or functional stability) and propagation of the MSC or MSC-derived cells.

General techniques in cell culture and media uses are outlined inter alia in Large Scale Mammalian Cell Culture (Hu et al., 1997, Curr Opin Biotechnol, 8, 148); Serum-free Media (K. Kitano, 1991, Biotechnology, 17, 73); or Large Scale Mammalian Cell Culture (Curr Opin Biotechnol, 1991, 2, 375).

In certain embodiments, the method may comprise: a) providing the composition comprising (i) the MSC or MSC-derived cells and (ii) the human plasma or human serum or the mixture thereof, optionally wherein said providing comprises a1) collecting the MSC or MSC-derived cells and a2) suspending the MSC or MSC-derived cells with at least the human plasma or human serum or the mixture thereof; and b) maintaining the composition at $T_x$ as described in Table 2 and for $t_x$ as described in Table 2.

In certain embodiments, the method may comprise: a) providing the composition comprising i) the MSC or MSC-derived cells and ii) the human plasma or human serum or the mixture thereof, optionally wherein said providing comprises a1) collecting the MSC or MSC-derived cells and a2) suspending the MSC or MSC-derived cells with at least the human plasma or human serum or the mixture thereof; and b) maintaining the composition at between about 2°C and about 8 °C for at least 24 hours, or for at least 30 hours, or for at least 36 hours, or for at least 42 hours, or for at least 48 hours, or for at least 72 hours, or for at least 84 hours, or for at least 96 hours, or for at least 120 hours, or for at least 144 hours, or for at least 168 hours, or for at least 192 hours.

The method may comprise: a) providing the composition comprising i) the MSC or MSC-derived cells and ii) the human plasma or human serum or the mixture thereof, optionally wherein said providing comprises a1) collecting the MSC or MSC-derived cells and a2) suspending the MSC or MSC-derived cells with at least the human plasma or human serum or the mixture thereof; and b) maintaining the composition at between about 15°C and ambient temperature for at least 24 hours, or for at least 30 hours, or for at least 36 hours, or for at least 42 hours, or for at least 48 hours, or for at least 72 hours, or for at least 84 hours, or for at least 96 hours, or for at least 120 hours, or for at least 144 hours, or for at least 168 hours, or for at least 192 hours.

In certain embodiments, the method may comprise: a) providing the composition comprising i) the MSC or MSC-derived cells and ii) the human plasma or human serum or the mixture thereof, optionally wherein said providing comprises a1) collecting the MSC or MSC-derived cells and a2) suspending the MSC or MSC-derived cells with at least the human plasma or human serum or the mixture thereof; and b) maintaining the composition at between about 15°C and about 25°C for at least 24 hours, or for at least 30 hours, or for at least 36 hours, or for at least 42 hours, or for at least 48 hours, or for at least 72 hours, or for at least 84 hours, or for at least 96 hours, or for at least 120 hours, or for at least 144 hours, or for at least 168 hours, or for at least 192 hours.

In certain embodiments, the method may comprise: a) providing the composition comprising i) the MSC or MSC-derived cells and ii) the human plasma or human serum or the mixture thereof, optionally wherein said providing comprises a1) collecting the MSC or MSC-derived cells and a2) suspending the MSC or MSC-derived cells with at least the human plasma or human serum or the mixture thereof; and b) maintaining the composition at between about 2°C and about 8 °C for at least 24 hours.

The method may comprise: a) providing the composition comprising i) the MSC or MSC-derived cells and ii) the human plasma or human serum or the mixture thereof, optionally wherein said providing comprises a1) collecting the MSC or MSC-derived cells and a2) suspending the MSC or MSC-derived cells with at least the human plasma or human serum or the mixture thereof; and b) maintaining the composition at between about 15°C and ambient temperature for at least 24 hours.

In certain embodiments, the method may comprise: a) providing the composition comprising i) the MSC or MSC-derived cells and ii) the human plasma or human serum or the mixture thereof, optionally wherein said providing comprises a1) collecting the MSC or MSC-derived cells and a2) suspending the MSC or MSC-derived cells with at least the human plasma or human serum or the mixture thereof; and b) maintaining the composition at between about 15°C and about 25°C for at least 24 hours.

The MSC or MSC-derived cells are in suspension in the composition.

The terms "suspension" and "cell suspension" generally refers to a heterogeneous mixture containing MSC or MSC-derived cells dispersed in a liquid phase. As the composition is liquid, the MSC or MSC-derived cells may in principle be able to, but need not, settle or sediment from the composition, even while the composition is maintained at the above-discussed temperature and time periods.

In certain embodiments of the methods, as taught herein, the composition may preferably remain liquid (i.e., in a liquid state) all through said maintaining the composition.

The term "liquid" is well appreciated in the art as referring to the state of matter with a definite volume but no fixed shape. In particular, in such embodiments, the composition does not become solid, semi-solid or gel like, i.e., does not form a gel / does not gelify.

The composition may remain liquid (i.e., in a liquid state as said above) all through said maintaining the composition at between about 0°C (e.g., about 0.1°C, e.g., about 0.10°C) and ambient temperature for at least 24 hours, or for at least 30 hours, or for at least 36 hours, or for at least 42 hours, or for at least 48 hours, or for at least 72 hours, or for at least 84 hours, or for at least 96 hours, or for at least 120 hours, or for at least 144 hours, or for at least 168 hours, or for at least 192 hours. The composition may remain liquid (i.e., in a liquid state) all through said maintaining the composition at between about 0°C (e.g., about 0.1°C, e.g., about 0.10°C) and ambient temperature for at least 24 hours.

In certain embodiments, the composition may remain liquid (i.e., in a liquid state as said above) all through said maintaining the composition at between about 0.1°C (e.g., about 0.10°C) and about 25°C for at least 24 hours, or for at least 30 hours, or for at least 36 hours, or for at least 42 hours, or for at least 48 hours, or for at least 72 hours, or for at least 84 hours, or for at least 96 hours, or for at least 120 hours, or for at least 144 hours, or for at least 168 hours, or for at least 192 hours. In certain embodiments, the composition may remain liquid (i.e., in a liquid state) all through said maintaining the composition at between about 0.1°C (e.g., about 0.10°C) and about 25°C for at least 24 hours.

In certain embodiments, the composition may remain liquid (i.e., in a liquid state as said above) all through said maintaining the composition at $T_x$ as described in Table 2 and for $t_x$ as described in Table 2.

In certain embodiments, the composition may remain liquid (i.e., in a liquid state as said above) all through said maintaining the composition at between about 2°C and about 8 °C for at least 24 hours, or for at least 30 hours, or for at least 36 hours, or for at least 42 hours, or for at least 48 hours, or for at least 72 hours, or for at least 84 hours, or for at least 96 hours, or for at least 120 hours, or for at least 144 hours, or for at least 168 hours, or for at least 192 hours. In certain embodiments, the composition may remain liquid (i.e., in a liquid state) all through said maintaining the composition at between about 2°C and about 8 °C for at least 24 hours.

The composition may remain liquid (i.e., in a liquid state as said above) all through said maintaining the composition at between about 15°C and ambient temperature for at least 24 hours, or for at least 30 hours, or for at least 36 hours, or for at least 42 hours, or for at least 48 hours, or for at least 72 hours, or for at least 84 hours, or for at least 96 hours, or for at least 120 hours, or for at least 144 hours, or for at least 168 hours, or for at least 192 hours. The composition may remain liquid (i.e., in a liquid state) all through said maintaining the composition at between about 15°C and ambient temperature for at least 24 hours.

In certain embodiments, the composition may remain liquid (i.e., in a liquid state as said above) all through said maintaining the composition at between about 15°C and about 25°C for at least 24 hours, or for at least 30 hours, or for at least 36 hours, or for at least 42 hours, or for at least 48 hours, or for at least 72 hours, or for at least 84 hours, or for at least 96 hours, or for at least 120 hours, or for at least 144 hours, or for at least 168 hours, or for at least 192 hours. In certain embodiments, the composition may remain liquid (i.e., in a liquid state) all through said maintaining the composition at between about 15°C and about 25°C for at least 24 hours.

As illustrated in the examples, the inventors have realised that *in vitro* preservation of MSC or MSC-derived cells in a composition based on human plasma or human serum advantageously retains viability of the cells, even after storage for extended time periods.

Hence, the specification provides the use of a composition comprising, consisting essentially of, or consisting of human plasma or human serum or a mixture thereof as an excipient or preservative for (which allows for) suspension storage of MSC or MSC-derived cells.

In certain embodiments of the methods or uses, as taught herein, the composition may further comprise additional components or constituents compatible with or conducive to *in vitro* preservation of cells in suspension, including, for example, aqueous storage liquids.

Such aqueous storage liquids are well-known in the art. Non-limiting examples of suitable aqueous storage liquids include PRIME-XV® Hypothermic Preservation Solution (Irvine Scientific, CA, USA); aqueous storage liquids based on tissue cell culture growth media, such as, e.g., EMEM, DMEM, or RPMI media; and aqueous storage liquids based on physiological electrolyte solutions, such as Plasma-Lyte® A (e.g., Plasma-Lyte® A Injection pH 7.4 (Multiple Electrolytes Injection, Type 1, USP) from Baxter, Deerfield, IL, USA), Lactated Ringer's solution (e.g., Lactated Ringer's Injection USP from Baxter, Deerfield, IL, USA), or Hartmann's solution.

The herein disclosed aspects and embodiments of the invention are further supported by the following examples.

## EXAMPLES

### Example 1 - *In vitro* preservation of human MSC-derived osteoblastic cells

The present example illustrates methods for non-cryogenic storage, in particular hypothermic (cold) storage, of living MSC-derived cells in suspension, which embody the principles of the invention. In particular, human MSC-derived osteoblastic cells were subjected to suspension storage at between 2°C and 8°C for at least 24 hours and up to 192 hours (8 days) in liquid storage media based on human plasma or human serum according to certain embodiments of the invention, compared to a liquid storage medium previously used in cell therapy products, based on a physiological electrolyte solution supplemented with human serum albumin. The stability of the MSC-derived osteoblastic cell product after storage was evaluated by determining cell survival, cell recovery (namely the ability of the cells to adhere to a surface), cell identity (namely the expression of key cell surface markers), and cell potency (namely bone-forming properties). The results set forth below confirmed the superiority of the human plasma- and human serum-based liquid storage media.

### Generation of MSC-derived osteoblastic cells

MSC-derived osteoblastic cells were obtained essentially as described in WO 2009/087213. Briefly, 20 to 60 ml of heparinized bone marrow (BM) were obtained from iliac crest of 8 healthy human volunteers. In parallel, serum from the healthy human donors was obtained after centrifugation of 160 ml of blood drained into dry tubes. Bone marrow was seeded into culture flasks at a fixed white blood cell density (50,000 cells/cm$^2$) and cultured in a conventional culture medium supplemented with serum, basic fibroblast growth factor (FGF-2), transforming growth factor beta 1 (TGFb-1) and growth factors, in a 37°C humidified atmosphere containing 5% $CO_2$. Mesenchymal stem cells (MSC) were allowed to attach prior to an initial medium change. Medium was changed regularly. At the end of primary culture, cells were detached, using trypsin/EDTA solution for 1-5 min at 37°C, counted and re-plated at 1,000 cells/cm$^2$ for secondary culture in culture flasks in the same medium. At the end of secondary culture, the MSC-derived osteoblastic cells were harvested and washed with phosphate-buffered saline.

### Cell suspension storage

After harvest the MSC-derived osteoblastic cells were suspended at a fixed cell density (sample volume 1 ml to 4 ml) in the following liquid storage media at room temperature:

- Plasma-Lyte® (Baxter, cat.no. AE0323) supplemented with 5% w/v human serum albumin (HSA) (diluted from a 20% w/v solution of HSA, Sanquin Blood Supply, Amsterdam, Netherlands) (also termed "standard excipient" here below and in the drawings)

- human plasma (100% Octaplas®, Octapharma AG, Lachen, Switzerland)

- human serum (100% autoserum)

- human serum enriched with human serum albumin (autoserum supplemented with 50% w/v HSA (C.A.F.-D.C.F., cat.no. CR-RK-450, form : aqueous solution with 20% of HSA, purity $\geq$ 95%))

The samples were stored at 2-8°C in a monitored temperature controlled refrigerator for 24, 48, 72, 96, 144 or 192 hours.

**Human plasma (Octaplas®) and human serum**

According to the manufacturer, Octaplas® is manufactured from pooled plasma (the plasma included in the pool may be of a single AB0 group, or of multiple AB0 groups). Frozen plasma units are thawed and pooled. Sodium dihydrogen phosphate dihydrate is added as a buffer against increase in pH due to loss of $CO_2$. After filtration through a 1 $\mu$m pore size membrane, the plasma pool is treated with solvent/detergent (S/D) reagents (1% v/v tri(n-butyl) phosphate (TNBP) and 1% v/v octoxynol for 1-1.5 hours at 30°C). The S/D reagents are removed by sequential oil and solid phase extraction procedures. Glycine is added to adjust the osmolality. Optionally, plasma with glycine is applied to a column filled with affinity ligand resin intended for selective binding of prion protein (PrPSc). Eventually, the product is sterile filtered and typically filled into sterile polyvinyl chloride blood bags, labelled, deep-frozen and stored at a temperature of -18°C or less.

**Cell survival**

Following the suspension storage at 2-8°C for 24, 48, 72, 96, 120, 144 or 192 hours, samples of the cell suspensions of the MSC-derived osteoblastic cells in the various liquid storage media (50$\mu$L) were diluted in 1:1 v:v with a 0.4% w/v Trypan Blue solution (fresh and filtered). About 50$\mu$L of the mixture was dropped on a slide with a counting chamber. The cells (comprising unstained viable cells, and non-viable cells stained in blue) were counted manually under the microscope. Cell survival for each sample was expressed as cell viability (i.e., the proportion of viable cells out of total cells counted) (Figure 1).
Storage of the MSC-derived osteoblastic cells in human plasma or human serum enabled a better maintenance of cell survival over time, compared to the standard excipient (Figure 1).

**Cell recovery**

After the suspension storage at 2-8°C for 72 hours, a fixed number of the MSC-derived osteoblastic cells (both dead and living cells, as evaluated by Trypan Blue staining), were re-plated in plastic culture plates at a density of 55,000 cells/cm$^2$. Cells were cultured in a conventional medium as described above supplemented with 5% v/v serum for 24 hours in a 37°C humidified atmosphere containing 5% $CO_2$. After 24 hours, the culture plates were analysed to assess the ability of the cells to re-adhere to a substrate after storage. In particular, the cells were visualised using a Romanowsky-type stain (Diff-Quik® staining, Medion Diagnostics AG, Düdingen, Switzerland). Briefly, cells were fixed in a methanol solution, and stained with sodium azide/eosin for cytoplasm (pink) and with thiazine dye for nucleus (blue).
As shown in Figure 2, only a few cells adhered to the substrate after 72 hours storage in the standard excipient. Conversely, in the cases of human plasma or human serum, cells readily adhered to the plastic substrate with a spindle-like shape, reaching confluence.
The number of cells that have re-attached to the substrate qualitatively reflects the percentage of cell viability in the corresponding population before re-plating (see Figure 1). Thus, the cells that are living after 72 hours of suspension in human plasma or human serum have kept the ability to re-adhere to plastic. In the case of the standard excipient, the number of living cells before re-plating was already quite low (Figure 1), which makes it quite difficult to draw conclusions regarding their ability to re-attach based on the results shown in Figure 2.

**Cell identity**

After the suspension storage at 2-8°C for 0-2, 24, 48, 72, 96, 120, 144 or 192 hours, cell surface markers were analysed by flow cytometry in the MSC-derived osteoblastic cells. To detect cell surface markers, the cells were incubated with the following conjugated monoclonal antibodies:

anti-CD45 (CD45 is a hematopoietic marker, and should be substantially absent from the MSC-derived osteoblastic cells), anti-CD73 (CD73 is a mesenchymal marker, and should be highly expressed by the MSC-derived osteoblastic cells) and anti-ALP for 15 min at room temperature, and then washed with phosphate-buffered saline (PBS) before centrifugation and re-suspension in 0.3 mL PBS. The results are summarised in the table in Figure 3.

As shown in Figure 3, the marker expression by the cells was maintained over the storage times, whichever medium was used. Thus, using human plasma or human serum, instead of the standard excipient, did not have a detrimental effect on the maintenance of cell identity of the MSC-derived osteoblastic cells during storage.

**Cell potency (*in vivo*)**

The ability of the MSC-derived osteoblastic cells to induce bone formation in mice after being stored in the various media was also assessed.

One hundred eight (108) female NMRI-nude mice were divided into three equally sized groups:

1) Control group, injected with the standard excipient (Plasma-Lyte® supplemented with 5% w/v HSA) without any cells;

2) A group injected with the MSC-derived osteoblastic cells suspended in the standard excipient; and

3) A group injected with the MSC-derived osteoblastic cells suspended in human plasma(100% Octaplas LG®, Octapharma AG, Lachen, Switzerland).

Each group was subdivided into 6 sub-groups of 6 mice each, corresponding to 6 different storage times of the MSC-derived osteoblastic cells (0-2, 48, 72, 96, 120 or 144 hours).

On day 0 (D0), mice were injected with the cell product - at a unique cell dose of $2.5 \times 10^6/100\mu L$ - or with the standard excipient without cells by subcutaneous injection over the calvaria (100 $\mu$L).

In this experiment, Alizarin Red (red) was used to stain the basal line, i.e., the mineralisation front at the time of cell implantation, calcein (green) was used to stain the early stage mineralisation front, roughly corresponding to the bone newly formed within the first week following cell implantation, and tetracyclin (yellow) was used to stain the later stage mineralisation front, roughly corresponding to the bone newly formed during the second week following cell implantation. Bone mineralised appeared blue under the microscope.

At D14 (i.e., 14 days after cell or control administration), mice were sacrificed. The calvarial bones were harvested and subjected to X-Ray imaging (Faxitron®) to assess bone density: the signal intensity (i.e., mean of pixel unit values), associated with the mineralised content, measured for each calvaria from the X-ray images, and analysed using the histogram tool of Adobe Photoshop®.

Additionally, calvarial bones were embedded in plastic and transversally sliced (5-$\mu$m slices) with a microtome. The thickness of the mineralised bone before and after cell injection was measured through fluorochrome incorporation. See for illustration Figure 4, in which the bone mineralised before cell injection appears comparatively darker, and the bone mineralised after cell injection appears comparatively lighter, due to incorporation of the fluorochromes, particularly the green calcein and yellow tetracyclin). The percentage of bone formation was calculated as follows:

$$\frac{\text{thickness of the mineralised bone 14 days after cell injection} \times 100}{\text{thickness of the mineralised bone before cell injection}}$$

which was measured, and expressed in %, for each calvaria. Values of initial and final thickness are the mean values of measures named on four different zones of the calvaria.

As shown in Figures 5A and 5B, freshly prepared MSC-derived osteoblastic cells stored for a very short time (0-2 hours) in either the standard excipient or human plasma have a similar potency for new bone formation.

In contrast, when the cells have been previously stored for at least 48 hours, their potency for new bone formation highly depends on the storage medium. Indeed, for virtually all tested storage times, both the number of pixels measured on X-ray images (reflective of bone density) and the percentage of bone formation were higher in calvaria injected with cells stored in human plasma, as compared to the standard excipient. In fact, the MSC-derived osteoblastic cells that have been stored in the standard excipient for 72 hours or more have similar potency for bone formation as the control excipient without cells. Thus, the potency of osteoblastic cells to promote new bone formation is maintained much longer when they are stored in human plasma, namely in this experiment up to at least 120 hours vs. less than 48 hours in the standard excipient.

**Claims**

1. A method for non-cryogenic *in vitro* preservation of cells comprising maintaining adherent mesenchymal stem cells (MSC) or adherent MSC-derived cells in suspension in a composition comprising at least 20% v/v human plasma or human serum or a mixture thereof, wherein the composition is maintained at between 0.1°C and 25°C.

2. The method according to claim 1, comprising:

   a) providing the composition comprising (i) the MSC or MSC-derived cells and (ii) the human plasma or human serum or the mixture thereof, optionally wherein said providing comprises a1) collecting the MSC or MSC-derived cells and a2) suspending the MSC or MSC-derived cells with at least the human plasma or human serum or the mixture thereof; and
   b) maintaining the composition, so as to effect preservation of the cells.

3. The method according to any one of claims 1 or 2, wherein the composition is maintained at between 2°C and 8°C.

4. The method according to any one of claims 1 to 3, wherein the composition is maintained for at least 24 hours, or for at least 30 hours, or for at least 36 hours, or for at least 42 hours, or for at least 48 hours, or for at least 72 hours, or for at least 96 hours, or for at least 120 hours, or for at least 144 hours, or for at least 168 hours, or for at least 192 hours.

5. The method according to claim 4, wherein the composition is maintained for at least 48 hours, preferably for at least 72 hours, more preferably for at least 96 hours, even more preferably for at least 120 hours, such as for at least 144 hours, or for at least 168 hours, or for at least 192 hours.

6. The method according to any one of claims 1 to 5, wherein the composition is maintained at between 2°C and 8°C for at least 48 hours, preferably for at least 72 hours, more preferably for at least 96 hours, even more preferably for at least 120 hours, such as for at least 144 hours, or for at least 168 hours, or for at least 192 hours.

7. The method according to any one of claims 1 to 6, wherein the source of human plasma is fresh plasma, freeze-dried plasma, solvent/detergent-treated plasma, fresh frozen plasma, thawed plasma, or cryoprecipitate, cryosupernatant or plasma concentrate such as concentrate from frozen plasma, or a mixture of any two or more thereof, or wherein the human serum is fresh serum, thawed frozen serum, or serum prepared from plasma, or a mixture of any two or more thereof.

8. The method according to any one of claims 1 to 7, wherein the composition remains liquid all through said maintaining of the composition.

9. The method according to any one of claims 1 to 8, wherein the concentration of the human plasma or human serum or the mixture thereof in the composition is at least 50% v/v, preferably at least 60% v/v, more preferably at least 70% v/v, even more preferably at least 80% v/v, still more preferably at least 90% v/v, yet more preferably at least 99-100% v/v.

10. The method according to any one of claims 1 to 9, wherein the concentration of the MSC or MSC-derived cells in the composition is between $1 \times 10^4$ and $1 \times 10^{11}$, or between $1 \times 10^5$ and $1 \times 10^{10}$, or between $1 \times 10^6$ and $1 \times 10^9$, or between $1 \times 10^7$ and $1 \times 10^8$, or between $2 \times 10^7$ and $5 \times 10^7$, such as $2.5 \times 10^7$ cells per mL of the composition.

11. The method according to any one of claims 1 to 10, wherein the composition consists essentially of or consists of i) the MSC or MSC-derived cells and ii) the human plasma or human serum or the mixture thereof.

12. The method according to any one of claims 1 to 10, wherein the composition is further supplemented with one or more fractionated components of plasma or serum, preferably wherein the composition is supplemented with human serum albumin (HSA).

13. The method according to any one of claims 1 to 12, wherein the MSC-derived cells comprise osteoprogenitors, osteoblastic cells, osteocytes, chondroblastic cells, chondrocytes, fibroblastic cells, fibroblasts, fibrocytes, tenoblasts, tenocytes, or synoviocytes.

**14.** The method according to any one of claims 1 to 13, wherein the MSC or MSC-derived cells are human MSC or MSC-derived cells.

**Patentansprüche**

**1.** Verfahren zur nicht kryogenen In-vitro-Konservierung von Zellen, umfassend Halten adhärenter mesenchymaler Stammzellen (MSC) oder adhärenter von MSC abgeleiteter Zellen in Suspension in einer Zusammensetzung, die wenigstens 20 Vol.-% menschliches Plasma oder menschliches Serum oder ein Gemisch davon umfasst, wobei die Zusammensetzung zwischen 0,1°C und 25°C gehalten wird.

**2.** Verfahren nach Anspruch 1, umfassend:

a) Bereitstellen der Zusammensetzung, die (i) die MSC oder von MSC abgeleiteten Zellen und (ii) das menschliche Plasma oder menschliche Serum oder das Gemisch davon umfasst, gegebenenfalls wobei das Bereitstellen a1) Sammeln der MSC oder von MSC abgeleiteten Zellen und a2) Suspendieren der MSC oder von MSC abgeleiteten Zellen mit wenigstens dem menschlichen Plasma oder menschlichen Serum oder dem Gemisch davon umfasst; und
b) Erhalten der Zusammensetzung, so dass eine Konservierung der Zellen bewirkt wird.

**3.** Verfahren nach einem der Ansprüche 1 oder 2, wobei die Zusammensetzung zwischen 2°C und 8°C gehalten wird.

**4.** Verfahren nach einem der Ansprüche 1 bis 3, wobei die Zusammensetzung wenigstens 24 Stunden, oder wenigstens 30 Stunden, oder wenigstens 36 Stunden, oder wenigstens 42 Stunden, oder wenigstens 48 Stunden, oder wenigstens 72 Stunden, oder wenigstens 96 Stunden, oder wenigstens 120 Stunden, oder wenigstens 144 Stunden, oder wenigstens 168 Stunden, oder wenigstens 192 Stunden, erhalten wird.

**5.** Verfahren nach Anspruch 4, wobei die Zusammensetzung wenigstens 48 Stunden, bevorzugt wenigstens 72 Stunden, stärker bevorzugt wenigstens 96 Stunden, noch stärker bevorzugt wenigstens 120 Stunden, wie z. B. wenigstens 144 Stunden, oder wenigstens 168 Stunden, oder wenigstens 192 Stunden, erhalten wird.

**6.** Verfahren nach einem der Ansprüche 1 bis 5, wobei die Zusammensetzung wenigstens 48 Stunden, bevorzugt wenigstens 72 Stunden, stärker bevorzugt wenigstens 96 Stunden, noch stärker bevorzugt wenigstens 120 Stunden, wie z. B. wenigstens 144 Stunden, oder wenigstens 168 Stunden, oder wenigstens 192 Stunden, zwischen 2°C und 8°C gehalten wird.

**7.** Verfahren nach einem der Ansprüche 1 bis 6, wobei es sich bei der Quelle für menschliches Plasma um frisches Plasma, gefriergetrocknetes Plasma, mit Lösungsmittel/Detergens behandeltes Plasma, frisches gefrorenes Plasma, aufgetautes Plasma, oder Kryopräzipitat, Kryoüberstand oder Plasmakonzentrat, wie z. B. Konzentrat von gefrorenem Plasma, oder ein beliebiges Gemisch von zwei oder mehr davon handelt, oder wobei es sich bei dem menschlichen Serum um frisches Serum, aufgetautes gefrorenes Serum, oder aus Plasma hergestelltes Serum, oder ein beliebiges Gemisch von zwei oder mehr davon handelt.

**8.** Verfahren nach einem der Ansprüche 1 bis 7, wobei die Zusammensetzung über das gesamte Erhalten der Zusammensetzung flüssig bleibt.

**9.** Verfahren nach einem der Ansprüche 1 bis 8, wobei die Konzentration des menschlichen Plasmas oder menschlichen Serums oder des Gemischs davon in der Zusammensetzung bei wenigstens 50 Vol.-%, bevorzugt wenigstens 60 Vol.-%, stärker bevorzugt wenigstens 70 Vol.-%, noch stärker bevorzugt wenigstens 80 Vol.-%, besonders stark bevorzugt wenigstens 90 Vol.-%, ganz besonders stark bevorzugt wenigstens 99-100 Vol.-% liegt.

**10.** Verfahren nach einem der Ansprüche 1 bis 9, wobei die Konzentration der MSC oder von MSC abgeleiteten Zellen in der Zusammensetzung zwischen $1 \times 10^4$ und $1 \times 10^{11}$, oder zwischen $1 \times 10^5$ und $1 \times 10^{10}$, oder zwischen $1 \times 10^6$ und $1 \times 10^9$, oder zwischen $1 \times 10^7$ und $1 \times 10^8$, oder zwischen $2 \times 10^7$ und $5 \times 10^7$, wie z. B. bei $2,5 \times 10^7$ Zellen pro ml der Zusammensetzung liegt.

**11.** Verfahren nach einem der Ansprüche 1 bis 10, wobei die Zusammensetzung aus i) den MSC oder von MSC abgeleiteten Zellen und ii) dem menschlichen Plasma oder menschlichen Serum oder dem Gemisch davon im Wesentlichen besteht oder besteht.

12. Verfahren nach einem der Ansprüche 1 bis 10, wobei die Zusammensetzung ferner mit einer oder mehreren fraktionierten Komponenten von Plasma oder Serum supplementiert ist, vorzugsweise wobei die Zusammensetzung mit menschlichem Serumalbumin (HSA) supplementiert ist.

13. Verfahren nach einem der Ansprüche 1 bis 12, wobei die von MSC abgeleiteten Zellen Osteoprogenitorzellen, osteoblastische Zellen, Osteozyten, chondroblastische Zellen, Chondrozyten, fibroblastische Zellen, Fibroblasten, Fibrozyten, Tenoblasten, Tenozyten oder Synoviozyten umfassen.

14. Verfahren nach einem der Ansprüche 1 bis 13, wobei es sich bei den MSC oder von MSC abgeleiteten Zellen um menschliche MSC oder von MSC abgeleitete Zellen handelt.


**Revendications**

1. Procédé pour la conservation *in vitro* non cryogénique de cellules comprenant le maintien de cellules souches mésenchymateuses (CSM) ou cellules dérivées de CSM adhérentes en suspension dans une composition comprenant au moins 20 % v/v de plasma humain ou de sérum humain ou un mélange de ceux-ci, dans lequel la composition est maintenue entre 0,1 °C et 25 °C.

2. Procédé selon la revendication 1, comprenant :

   a) la fourniture de la composition comprenant (i) les CSM ou cellules dérivées de CSM et (ii) le plasma humain ou sérum humain ou le mélange de ceux-ci, facultativement dans lequel ladite fourniture comprend a1) la collecte des CSM ou cellules dérivées de CSM et a2) la mise en suspension des CSM ou cellules dérivées de CSM avec au moins le plasma humain ou sérum humain ou le mélange de ceux-ci ; et
   b) le maintien de la composition, de façon à effectuer la conservation des cellules.

3. Procédé selon l'une quelconque des revendications 1 ou 2, dans lequel la composition est maintenue entre 2 °C et 8 °C.

4. Procédé selon l'une quelconque des revendications 1 à 3, dans lequel la composition est maintenue pendant au moins 24 heures, ou pendant au moins 30 heures, ou pendant au moins 36 heures, ou pendant au moins 42 heures, ou pendant au moins 48 heures, ou pendant au moins 72 heures, ou pendant au moins 96 heures, ou pendant au moins 120 heures, ou pendant au moins 144 heures, ou pendant au moins 168 heures, ou pendant au moins 192 heures.

5. Procédé selon la revendication 4, dans lequel la composition est maintenue pendant au moins 48 heures, de préférence pendant au moins 72 heures, plus préférablement pendant au moins 96 heures, encore plus préférablement pendant au moins 120 heures, tel que pendant au moins 144 heures, ou pendant au moins 168 heures, ou pendant au moins 192 heures.

6. Procédé selon l'une quelconque des revendications 1 à 5, dans lequel la composition est maintenue entre 2 °C et 8 °C pendant au moins 48 heures, de préférence pendant au moins 72 heures, plus préférablement pendant au moins 96 heures, encore plus préférablement pendant au moins 120 heures, tel que pendant au moins 144 heures, ou pendant au moins 168 heures, ou pendant au moins 192 heures.

7. Procédé selon l'une quelconque des revendications 1 à 6, dans lequel la source de plasma humain est du plasma frais, du plasma lyophilisé, du plasma traité par solvant/détergent, du plasma frais congelé, du plasma décongelé, ou un cryoprécipité, un cryosurnageant ou un concentré de plasma tel qu'un concentré de plasma congelé, ou un mélange quelconque de deux ou plus de ceux-ci, ou dans lequel le sérum humain est du sérum frais, du sérum congelé décongelé, ou du sérum préparé à partir de plasma, ou un mélange quelconque de deux ou plus de ceux-ci.

8. Procédé selon l'une quelconque des revendications 1 à 7, dans lequel la composition reste liquide tout au long dudit maintien de la composition.

9. Procédé selon l'une quelconque des revendications 1 à 8, dans lequel la concentration du plasma humain ou du sérum humain ou du mélange de ceux-ci dans la composition est au moins 50 % v/v, de préférence au moins 60 % v/v, plus préférablement au moins 70 % v/v, encore plus préférablement au moins 80 % v/v, encore plus préférablement au moins 90 % v/v, de manière préférée au moins 99-100 % v/v.

10. Procédé selon l'une quelconque des revendications 1 à 9, dans lequel la concentration des CSM ou cellules dérivées de CSM dans la composition est comprise entre $1 \times 10^4$ et $1 \times 10^{11}$, ou entre $1 \times 10^5$ et $1 \times 10^{10}$, ou entre $1 \times 10^6$ et $1 \times 10^9$, ou entre $1 \times 10^7$ et $1 \times 10^8$, ou entre $2 \times 10^7$ et $5 \times 10^7$, telle que $2,5 \times 10^7$ cellules par ml de la composition.

11. Procédé selon l'une quelconque des revendications 1 à 10, dans lequel la composition est essentiellement constituée ou est constituée de i) les CSM ou cellules dérivées de CSM et ii) le plasma humain ou sérum humain ou le mélange de ceux-ci.

12. Procédé selon l'une quelconque des revendications 1 à 10, dans lequel la composition est en outre supplémentée avec un ou plusieurs composants fractionnés de plasma ou de sérum, de préférence dans lequel la composition est supplémentée avec de la sérum-albumine humaine (HSA).

13. Procédé selon l'une quelconque des revendications 1 à 12, dans lequel les cellules dérivées de CSM comprennent des ostéoprogéniteurs, des cellules ostéoblastiques, des ostéocytes, des cellules chondroblastiques, des chondrocytes, des cellules fibroblastiques, des fibroblastes, des fibrocytes, des ténoblastes, des ténocytes ou des synoviocytes.

14. Procédé selon l'une quelconque des revendications 1 à 13, dans lequel les CSM ou cellules dérivées de CSM sont des CSM ou cellules dérivées de CSM humaines.

*Fig. 1*

*Fig. 2*

CD73 (%)

| | Fresh (0-2 hrs) | +24 hrs | +48 hrs | +72 hrs | +96 hrs | +120 hrs | +144 hrs | +192 hrs |
|---|---|---|---|---|---|---|---|---|
| Standard excipient | 98.50 ± 1.00 (n=12) | 97.80 ± 1.80 (n=4) | 96.04 ± 2.79 (n=5) | 88.70 ± 13.29 (n=2) | 96.70 (n=1) | NA | NA | NA |
| Plasma | | 98.05 ± 0.58 (n=4) | 98.00 ± 1.68 (n=5) | 96.37 ± 3.71 (n=3) | 98.10 ± 0.92 (n=5) | 97.45 ± 1.53 (n=4) | 96.10 (n=1) | 95.23 ± 3.03 (n=3) |
| Serum | | 98.03 ± 0.64 (n=3) | 98.40 ± 0.62 (n=3) | 98.27 ± 0.32 (n=3) | 97.2 (n=1) | NA | 97.70± 0.14 (n=2) | 96.80 ± 0.28 (n=2) |
| HSA-enriched serum | | 96.05± 2.05 (n=2) | 97.2 ± 1.99 (n=2) | 98.15± 0.07 (n=2) | 97.7 (n=1) | NA | 98.10 (n=1) | NA |

CD45 (%)

| | Fresh (0-2 hrs) | +24 hrs | +48 hrs | +72 hrs | +96 hrs | +120 hrs | +144 hrs | +192 hrs |
|---|---|---|---|---|---|---|---|---|
| Standard excipient | 0.8 ± 0.5 (n=12) | 1.5 ± 0.9 (n=4) | 1.2 ± 0.8 (n=5) | 3.6 ± 1.6 (n=2) | 0.1 (n=1) | NA | NA | NA |
| Plasma | | 1.8 ± 0.7 (n=4) | 0.6 ± 0.4 (n=5) | 0.9 ± 0.7 (n=3) | 0.9 ± 0.8 (n=5) | 0.8 ± 0.6 (n=4) | 0.4 (n=1) | 0.9 ± 1.5 (n=3) |
| Serum | | 2.7 ± 1.7 (n=3) | 0.8 ± 0.3 (n=3) | 1.1 ± 0.6 (n=3) | 1.7 (n=1) | NA | 0.6± 0.5 (n=2) | 0.2 (n=2) |
| HSA-enriched serum | | 1.0 ± 0.1 (n=2) | 1.6 ± 0.1 (n=2) | 1.6 ± 1.5 (n=2) | 1.6 (n=1) | NA | 2.5 (n=1) | NA |

*Fig. 3*

Fig. 4

## A

Fig. 5

EP 3 285 575 B1

Fig. 5

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 2014242181 A
- US 2013059286 A
- WO 2009087213 A
- WO 2014049063 A
- US 5486359 A
- US 5811094 A
- US 5736396 A
- US 5837539 A
- US 5827740 A
- WO 2007093431 A
- US 5972703 A
- US 4764369 A

### Non-patent literature cited in the description

- **CHEN et al.** *Cell transplantation,* 2013, vol. 22 (6), 1075-1086
- **LANE et al.** *Transfusion,* 2009, vol. 49 (7), 1471-1481
- **GARVICAN et al.** *Stem Cell Res Ther,* 2014, vol. 5, 94
- Differentiation and Characterization of Human MSCs. **REGER, R.L. et al.** Mesenchymal Stem Cells: Methods and Protocols (Methods in Molecular Biology). Humana Press, 2008, vol. 449, 93-107
- Mesenchymal Stem Cell Assays and Applications (Methods in Molecular Biology). Humana Press, 2011, vol. 698, 201-352
- **JAISWAL et al.** *J Cell Biochem,* 1997, vol. 64, 295-312
- **GREGORY et al.** *Analytical Biochemistry,* 2004, vol. 329, 77-84
- **PITTENGER et al.** *Science,* 1999, vol. 284, 143-7
- **LEE et al.** *Tissue Engineering,* 2011, vol. 18, 484-98
- **DIAZ-ROMERO et al.** *J Cell Physiol,* 2005, vol. 202 (3), 731-42
- **LI et al.** *World J Gastroenterol,* 2014, vol. 20 (16), 4648-61
- **BRISSETT et al.** *Arthritis Rheum,* 2012, vol. 64 (1), 272-80
- **GÜNGÖRMÜS et al.** *Connect Tissue Res,* 2008, vol. 53 (6), 485-91
- **TAMER et al.** *Interdiscip Toxicol,* 2013, vol. 6 (1), 111-125
- **BARTOK et al.** *Immunol Rev,* 2011, vol. 233 (1), 233-255
- **HOROWITZ et al.** *Blood,* 1992, vol. 3, 826-831
- **HU et al.** *Curr Opin Biotechnol,* 1997, vol. 8, 148
- **K. KITANO.** *Biotechnology,* 1991, vol. 17, 73
- *Curr Opin Biotechnol,* 1991, vol. 2, 375